# EUROPEAN PATENT SPECIFICATION

(11) **EP 3 024 898 B1**
(45) Date of publication and mention of the grant of the patent: **08.11.2017**
(21) Application number: 13744778.5
(22) Date of filing: 25.07.2013
(51) Int. Cl.: C09D 7/00

(54) **ENCAPSULATED CATALYSTS**
EINGEKAPSELTE KATALYSATOREN
CATALYSEURS ENCAPSULÉS

(43) Date of publication of application: 01.06.2016
(73) Proprietor: OMG UK Technology Limited, London EC2V 7EX (GB); Mikrocaps D.O.O., 1000 Ljubljana (SI)
(72) Inventor: GIBBS, Hugh Wynn, Knutsford, Cheshire WA16 9QJ (GB); GOL, Franjo, 51371 Leverkusen (DE); VRHUNEC, Aljosa, 1000 Ljubljana (SI); STEFANEC, Dejan, 1000 Ljubljana (SI); PUSLAR, Jurij, 1000 Ljubljana (SI)
(74) Representative: Abel & Imray
(86) International application number: PCT/GB2013/051998
(87) International publication number: WO 2015/011430

(56) References cited:
- US-A- 5 019 346
- US-A1- 2010 233 146
- US-B1- 6 294 571

## Description

### Technical Field

The present invention relates to paint, ink and other coating formulations, particularly alkyd-based formulations comprising metal driers, such as iron- and manganese-containing compounds, which exhibit a reduced propensity to develop a skin on storage.

### Background of the Invention

Alkyd resins are a well understood and dominant binder in many oxidatively curable commercial paints and other solvent-based coatings. Alkyd emulsion paints, in which the continuous phase is aqueous, are also widely available commercially. Alkyd resins are produced by the reaction of polyols with carboxylic acids or anhydrides. To make them susceptible to what is commonly referred to as a drying process, some alkyd resins are reacted with unsaturated triglycerides or other source of unsaturation. Plant and vegetable oils, such as linseed oil, are frequently used as the source of triglycerides. In these drying processes, unsaturated alkene groups can react with oxygen from the air, causing the oils to crosslink and harden. This oxidative curing process, although not drying, gives the appearance of drying and is often and herein referred to as such. The length of time required for drying depends on a variety of factors, including the constituents of the alkyd resin and the amount and nature of the solvent - sometimes referred to as the drying oil - employed.

Whilst the autoxidation and polymerisation chemistries that occur during the drying of alkyd-based and other oxidatively curable resins will proceed in the absence of catalysis, it is customary to include in such curable resins small, i.e. catalytic, quantities of optionally organic metal salts, often referred to as metal driers, which catalyze the polymerisation of unsaturated material, so as to form a three-dimensional network.

Typical driers for solvent-based coatings frequently include alkyl carboxylates, typically C₆-C₁₈ carboxylates, of metals such as cobalt, manganese, cerium, lanthanum, neodymium, lead, zirconium, zinc, vanadium, strontium, barium, aluminium, potassium, calcium and iron. Such metal carboxylates are often referred to as metal soaps. Redox-active metals, such as cobalt, manganese, cerium, lanthanum, neodymium, vanadium and iron, enhance radical formation, and thus the oxidative curing process, whilst so-called secondary driers, such as complexes based on strontium, zirconium, zinc, barium, aluminium, potassium and calcium, enhance the action of the redox-active metals. Often these soaps are based on medium-chain alkyl carboxylates such as 2-ethyl-hexanoate. The lipophilic units in such soaps enhance the solubility of the drier in solvent-based paints and other coatings.

As well as metal soaps, a variety of metal driers that are redox metal complexes containing organic ligands are used as paint driers, for example manganese compounds comprising 2,2'-bipyridine, 1,4,7-trimethyl-1,4,7-triazacyclononane or 1,10-phenanthroline ligands.

The formation of a skin or lumpy matter is a problem observed in many oil-based (i.e. organic solvent-based) formulations, and in particular in organic solvent-based alkyd resins, as a consequence of oxidation during storage or transportation. Oxidative polymerisation reactions thus lead to the skin formation before application, as well as drying after application. As alluded to above, these polymerisation reactions can be triggered by radicals generated by the action of metal-based driers, for example cobalt-, manganese- or iron-containing driers. In other words, the cause of the skin formation is often associated with the presence of metal driers.

Skin formation during manufacture and storage of air-drying paints and other coatings, in particular of alkyd-based resins, is clearly undesirable. Skin formation can lead to material losses and usage problems, such as surface irregularity after application owing to skin particles remaining in the paint.

Addition of compounds that quench the radicals formed during the storage or transportation processes reduce the skin-forming tendencies of such formulations. Many antiskinning agents are therefore antioxidants. However, addition of such antiskinning antioxidants can also slow the drying desired after application, by reducing the activity of the metal driers.

Oximes, and in particular methylethylketoxime (MEKO), are known to reduce skin formation considerably, particularly with cobalt-based driers. It is understood that the oxime binds to the metal ion during storage of the resin, thereby preventing the metal drier from reacting with oxygen and the substrate for radical formation that otherwise leads to polymerisation and skin formation. Upon application of the paint or other coating as a thin layer on a surface, the MEKO can evaporate. In this way, skinning can be prevented or ameliorated, but the cobalt soap can function, after application, as a polymerisation catalyst (see JH Bieleman in Additives in Plastics and Paints, Chimia, 56, 184 (2002)).

Methyl ethyl ketoxime and cyclohexanone oxime exhibit very similar toxic effects. For both chemicals, the major toxicity is to erythrocytes and the hematopoietic system. Each chemical causes similar lesions in the olfactory epithelium. Hyperplasia of the urinary bladder transitional epithelium was observed in mice exposed to methyl ethyl ketoxime but not cyclohexanone oxime. For methyl ethyl ketoxime, the no observed-adverse-effect level (NOAEL) for erythrotoxicity is 312 ppm in the drinking water for rats and 2,500 ppm for mice (see National Toxicology Program, Toxicity Report Series, Number 51, July 1999, NIH Publication 99-3947).

Other antiskinning agents, or ways to address the problem of skinning, other than those involving the use of oximes such as MEKO, have been described. For example, WO 00/11090 describes the use of 1,3-diketones, pyrazoles and imidazoles to reduce the skinning properties; WO 2007/024592 describes the use of isoascorbate as an antiskinning agent and a co-promoter of metal-based driers; and WO 2008/127739 describes the use of hydroxylamine as antiskinning agent. Whilst such additives reduce the tendency towards skinning, they can lead to decreased performance of the metal drier if their degree of incorporation is too great and they do not evaporate sufficiently during the coating (e.g. paint) application.

Whilst cobalt driers have been employed for many years as paint driers, there is a need to develop alternatives, not least since it is very probable that cobalt soaps will be classified as carcinogenic materials. Iron- and manganese-based paint driers in particular have received considerable attention in recent years in the academic patent literature as alternatives to cobalt-based driers. For example see publications by JH Bieleman in Additives in Plastics and Paints, Chimia, infra; and in Marcomol. Symp., 187, 811 (2002); and R van Gorkum, and E Bouwman, Coord. Chem. Rev., 249, 1709 (2005)).

WO 03/093384 describes the use of reducing biomolecules in combination with transition-metal salts or complexes based on pyrazoles, aliphatic and aromatic amines, 2,2'-bipyridine, 1,10'-phenanthroline and 1,4,7-trimethyl-1,4,7-triazacyclononane. Iron and manganese complexes thereof were preferred. WO 03/029371 describes the use of (preferably) manganese Schiff base compounds to enhance drying of coatings. EP 1382648 describes the use of manganese compounds with acetylacetonate and bidentate nitrogen donor ligands for improved paint drying capabilities and antiskinning properties. WO 2008/003652 describes the use of tetradentate, pentadentate or hexadentate nitrogen ligands bound to manganese and iron as siccative for curing alkyd-based resins, with optionally phenolic-based antioxidants present. WO 2012/092034 claims the use of siccatives based on transition metal salts of porphyrin ligands. US 2010/233146 relates to a material, which may be a coating, which includes an enzyme.

Whilst progress has been made in addressing the problem of skinning by the finding of new antiskinning compounds, these each suffer from the disadvantage that, if their degree of incorporation is too great and/or evaporation of the antiskinning or antioxidant upon applying of the coating does not occur, or does not occur sufficiently, such as for substantially non-volatile phenolic based antioxidants, careful formulation will be essential to avoid drying being too slow. On the other hand, underdosing can lead to enhanced skinning.

WO 2012/093520 claims the use of aqueous solutions of tetradentate, pentadentate or hexadentate nitrogen ligands bound to manganese and iron as siccatives for curing alkyd-based resins gives reduced skinning relative that seen when the siccatives are in normal organic solvent solution. However performance of these systems is still not equivalent to that of the traditional cobalt-MEKO systems. Therefore there exists a need for a cobalt free siccative system with resistance to skinning.

There are additional drawbacks to the use of the manganese and iron based siccatives referenced above. In some coating formulations containing large amounts of high surface area pigments, matting agents, and extenders or fillers such as carbon black and fumed fumed silica, the activity of the siccative is lost with time as the siccative is absorbed onto the surface of the pigment /filler - an effect know as "loss of dry". While this is a problem for cobalt siccatives it is more marked for the cobalt free siccatives as these are significantly more active than cobalt so lower amounts are present in the coating and so any adsorption has a disproportionally greater effect. Prior treatment of the pigment/filler with surfactants or dispersing agents to reduce the adsorption can overcome this problem to some extent. In some long oil alkyd or so called "high solids" alkyds the hardness of the cured film using the cobalt free siccatives can be lower than that seen with cobalt. The correct selection of secondary driers can help improve film hardness in some cases.

### Summary of the Invention

It has been found that by encapsulation of a solution of the catalyst in a polymer shell the resulting encapsulated catalyst is protected in storage in the coating formulation so skinning and absorption onto pigments is significantly reduced but that drying performance in oxidatively curable coating formulations, such as an alkyd-based formulations, is unaffected. The controlled release of the catalyst also gives a film with increased hardness compared to the unencapsulated product.

The present invention provides an oxidatively curable solvent-based coating compositon as defined in claim 1.

The present invention also provides a method of preventing skinning of an oxidatively curable solvent-based coating composition as defined in claim 8; and a method of forming an encapsulated siccative for use in a solvent-based coating as defined in claim 13.

### Detailed Description of the Invention

Throughout the description and claims generic groups are often used, for example alkyl, alkoxy, aryl. Unless otherwise specified, the following are preferred group restrictions that may be applied to generic groups found within compounds disclosed herein:
alkyl: linear and branched C₁-₈-alkyl saturated acyclic hydrocarbon monovalent groups; said alkyl group may further optionally include one or more suitable substituents independently selected from the group consisting of amino, halogen, hydroxy, sulfhydryl, haloalkyl and alkoxy;
alkenyl: straight and branched C₂₋₆ unsaturated acyclic hydrocarbon monovalent groups; said alkenyl group may further optionally include one or more suitable substituents independently selected from the group consisting of amino, halogen, hydroxy, sulfhydryl, haloalkyl and alkoxy;
cycloalkyl: C₃₋₈ monosaturated hydrocarbon monovalent group, or a C₇₋₁₀ polycyclic saturated hydrocarbon monovalent group;
aryl: selected from homoaromatic compounds having a molecular weight under 300;
heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl,
heterocycloalkyl: selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl,
carboxylate derivative: the group --C(O)OR, wherein R is selected from: hydrogen; C1-C6-alkyl; phenyl; C1-C6-alkyl-C6H5; Li; Na; K; Cs; Mg; and Ca, carbonyl derivative: the group --C(O)R, wherein R is selected from: hydrogen; C1-C6-alkyl; phenyl; C1-C6-alkyl-C6H5 and amine (to give the amide) selected from the group: --NR'2, wherein each R' is independently selected from: hydrogen; C1-C6-alkyl; C1-C6-alkyl-C6H5; and phenyl, wherein when both R' are C1-C6-alkyl both R' together may form an --NC3 to an --NC5 heterocyclic ring with any remaining alkyl chain forming an alkyl substituent to the heterocyclic ring, sulphonate: the group --S(O)₂OR, wherein R is selected from: hydrogen; C1-C6-alkyl; phenyl; C1-C6-alkyl-C6H5; Li; Na; K; Cs; Mg; and Ca.

Unless otherwise specified, the following are more preferred group restrictions that may be applied to groups found within compounds disclosed herein:
alkyl: linear and branched C₁₋₆-alkyl;
alkenyl: C₃₋₆-alkenyl;
cycloalkyl: C₆₋₈-cycloalkyl;
aryl: selected from group consisting of: phenyl; biphenyl; naphthalenyl; anthracenyl; and phenanthrenyl;
heteroaryl: selected from the group consisting of: pyridinyl; pyrimidinyl; quinolinyl; pyrazolyl; triazolyl; isoquinolinyl; imidazolyl; and oxazolidinyl, wherein the heteroaryl may be connected to the compound via any atom in the ring of the selected heteroaryl,
heterocycloalkyl: selected from the group consisting of: pyrrolidinyl; morpholinyl; piperidinyl; piperidinyl; 1,4-piperazinyl; tetrahydrofuranyl; 1,4,7-triazacyclononanyl; 1,4,8,11-tetraazacyclotetradecanyl; 1,4,7,10,13-pentaazacyclopentadecanyl; 1,4,7,10-tetraazacyclododecanyl; and piperazinyl, wherein the heterocycloalkyl may be connected to the compound via any atom in the ring of the selected heterocycloalkyl, carboxylate derivative: the group -C(O)OR, wherein R is selected from hydrogen; Na; K; Mg; Ca; C1-C6-alkyl; and benzyl.

As used herein, and unless otherwise stated, the term "arylalkyl" refers to an aliphatic saturated hydrocarbon monovalent group onto which an aryl group (such as defined above) is attached, and wherein the said aliphatic or aryl groups may be optionally substituted with one or more substituents independently selected from the group consisting of halogen, amino, hydroxyl, sulfhydryl, alkyl, haloalkyl and nitro. Specific examples of the arylalkyl groups are those having 7 to 40 carbon atoms wherein the alkyl group may be straight-chain or branched, such as benzyl, phenylethyl, phenylpropyl, phenylbutyl, phenylpentyl and phenylhexyl groups.

As used herein, and unless otherwise stated, the term "alkylaryl" refers to an aryl group (such as defined above) onto which an aliphatic saturated hydrocarbon monovalent group is attached, and wherein the said aliphatic or aryl groups may be optionally substituted with one or more substituents independently selected from the group consisting of halogen, amino, hydroxyl, sulfhydryl, alkyl, trifluoromethyl and nitro. Specific non-limiting examples of the unsubstituted or alkyl-substituted aryl groups are the aryl groups having 6 to 18 carbon atoms such as phenyl, diphenyl and naphthyl groups, and alkylaryl groups having 7 to 40 carbon atoms wherein the alkyl group may be straight-chain or branched and may be bonded to any position on the aryl group, such as tolyl, xylyl, ethylphenyl, propylphenyl, butylphenyl, pentylphenyl, hexylphenyl, heptylphenyl, octylphenyl, nonylphenyl, decylphenyl, undecylphenyl, dodecylphenyl, diethylphenyl, dibutylphenyl and dioctylphenyl groups. The alkylaryl groups may additionally have substituents including functional groups such as alkoxy, hydroxy, cyano, nitro, halides and carboxylic acids.

Without wishing to be bound by theory, it is assumed that skinning is the result of premature oxidative crosslinking of the coating resin. If therefore the siccative could be physically isolated from either the resin or oxygen or both then skinning should be eliminated. Microencapsulation is a well-known technique in which particles or droplets of a material (the core) are surrounded by a coating (the wall). The purpose of this is to protect the core from its surroundings, or to control the rate at which the core is released into its surroundings. Even when the aim of the microencapsulation is the isolation of the core from its surrounding, the wall must be ruptured at the time of use. Many walls are ruptured easily by pressure or shear stress. Capsule contents may be released by melting the wall, or breaking it by solvent action, enzyme attack, chemical reaction, hydrolysis, or slow disintegration.

Microencapsulation can be carried out by a range of physical methods including pan and air coating, spray drying and centrifugal extrusion, and by physico-chemical and chemical methods such as complex coacervation, interfacial polycondensation and crosslinking, in-situ polymerisation and matrix polymerisation.

Microencapsulated catalyst systems have been described in the prior art. WO 2003/006151, WO 2005/016510 and WO 2007/096592 describe encapsulated palladium based catalyst systems and methods for their production. WO 2005/016510 describes a process in which a metal catalyst is microencapsulated in the presence of a ligand. This publication describes that the use of a ligand may reduce catalyst leaching during the encapsulation process.

GB 2052296 and US 4895994 describe the preparation of a non-pyrophoric Raney catalyst by coating a particulate Raney catalyst in a solid wax. US 3594666 describes a system for the microencapsulation of heterogeneous catalysts.

Solutions of the siccatives may be also microencapsulated by a variety of the above techniques, but up to now no suitable release mechanism has been available which allows the microcapsules to remain stable in the can on storage but for the core to be released when the coating is applied. For example pressure and shear stress are not suitable as these are more severe during the coating manufacturing process that at the application process.

One component of the invention involves the formation of microcapsules of the siccatives which remain stable in the coating on storage, hence eliminating skinning and "loss of dry" by siccative adsorption, but immediately after applying to a substrate the releasing of the siccative solution is triggered upon desiccation allowing the siccative to function normally. Suitable microcapsules for use in the coatings formulations may include microcapsules of both the relatively thin-walled (quick release type) and the relatively thicker wall (controlled released type) or combinations thereof.

The invention has broad utility in relation to a wide variety of solvent-based coating compositions, which term is to be interpreted broadly herein. Examples of coating compositions include clear or coloured varnishes, primary coats, filling pastes, glazes, emulsions and floor coverings, e.g. linoleum floor coverings. Particular embodiments of the invention relate to solvent-based paints and inks, particularly paints such as high-specification paints intended for domestic use.

Use of the term "oxidatively curable solvent-based coating compositions" herein is thus intended to embrace a wide variety of coloured (e.g. by way of pigment) and non-coloured materials, including oils and binders, which form a continuous coating through the course of oxidative reactions, typically to form cross-linkages and other bond formations. Generically, such coating compositions may be characterised by the presence of (typically poly)unsaturated resins that react to form a solid film on a substrate, the resins being initially present in the oxidatively curable solvent-based coating compositions either as liquids, dissolved in an organic solvent or as solids dispersed in a continuous liquid phase. Reaction to form the desired coating upon curing arises from polymerisation reactions initiated by oxidation. Examples of oxidatively curable coating compositions include alkyd-, acrylate-, urethane- and epoxy ester-based resins. Typically the curable (e.g. alkyd resin) portion of the curable composition will comprise between about 1 and about 90% by weight of the total weight of the oxidatively curable solvent-based coating composition, e.g. between about 20 and about 70% by weight of the total weight of the oxidatively curable solvent-based coating composition.

Alkyd resins are a particularly important member of the class of oxidatively curable coating compositions and are a well-studied class of resin to which the present invention may be applied. Hereinafter, particular embodiments of the invention are described with particular reference to the use of alkyd resins, also referred to as alkyd-based resins or alkyd-based binders. Whilst these represent particularly significant embodiments of the invention, the invention is not to be considered to be so limited. The invention is applicable to a wide range of oxidatively curable coating compositions, typically those comprising at least 1 or 2% by weight of an unsaturated compound (e.g. comprising unsaturated (non-aromatic) double or triple carbon-carbon bonds).

Where percentages by weight are referred to herein (wt % of % w/w), these mean, unless a context clearly dictates to the contrary, percentages by weight with respect to the components of the oxidatively curable solvent-based coating compositions that serve to provide the coating upon curing. With an oxidatively curable alkyd coating composition, therefore, the combined weights of the components of the composition that become, i.e. are incorporated into, the alkyd resin coating, i.e. once cured, are those with respect to which weight percentages herein are based.

Skinning is a problem with oxidatively curable solvent-based compositions. With water-based oxidatively curable compositions, such as alkyd-based emulsion paints, the binder particles (those that form the coating) are embedded within the aqueous matrix, preventing skinning from being a problem. In other words there is a well-recognised technical difference between water-based and solvent-based curable compositions, the present invention relating to the latter.

By oxidatively curable solvent-based compositions is meant herein, consistent with the nomenclature used in the art, compositions that are based on organic (i.e. non-aqueous) solvents. Examples of suitable solvents include aliphatic (including alicyclic and branched) hydrocarbons, such as hexane, heptane, octane, cyclohexane, cycloheptane and isoparafins; aromatic hydrocarbons such as toluene and xylene; ketones, e.g. methyl ethyl ketone and methyl isobutyl ketone; alcohols, such as isopropyl alcohol, *n*-butyl alcohol and *n*-propyl alcohol; glycol monoethers, such as the monoethers of ethylene glycol and diethylene glycol; monoether glycol acetates, such as 2-ethoxyethyl acetate; as well as mixtures thereof. Isomeric variants are included. Thus the term hexane embraces mixtures of hexanes. According to particular embodiments of the invention, the solvent is a hydrocarbyl (i.e. hydrocarbon) solvent, e.g. an aliphatic hydrocarbyl solvent, e.g. solvents comprising mixtures of hydrocarbons. Examples include white spirit and solvents available under the trademarks Shellsol™, from Shell Chemicals and Solvesso™ and Exxsol®, from ExxonMobil.

The compositions by the invention comprise a transition metal drier, which is a complex of a transition metal ion and a polydentate accelerant ligand. Each of these will now be described.

The transition metal ions used in the oxidatively curable coating composition are selected from Fe(II), Fe(III), Mn(II) Mn(III), or Mn(IV). Mixtures of ions may be provided.

As is known the facility of the metal drier to catalyse the desired oxidation chemistry of oxidatively curable coating compositions arises from its ability to participate in redox chemistry; the nature of the counteranion is not of great importance. This may serve to provide a readily water-soluble salt such as a chloride, sulfate or acetate. Others counterions are evident to the skilled person.

In order to enhance the activity of the transition metal ions a so-called accelerating compound, herein the "polydentate accelerant ligand", is also included. As the language suggests the term polydentate accelerant ligand is a compound capable of coordinating to the transition metal ion by way of more than one donor site within the ligand and serves to accelerate the drying (curing process) of the oxidatively curable coating composition after application.

It is to be understood that the transition metal ions and the polydentate accelerant ligand may both be, and in many embodiments of the invention, are provided by a pre-formed transition metal complex of a polydentate accelerant ligand, i.e. one which has been prepared before an aqueous solution (e.g. water) comprising it is prepared. Thus, the microcapsules may comprise a pre-formed transition metal drier complex of a polydentate accelerant ligand. Alternatively, the two components may be provided separately, e.g. with the transition metal ions being provided as a transition metal salt and the polydentate accelerant ligand as such. A complex of the metal ion and the polydentate accelerant ligand can thus form *in-situ* in the aqueous solution.

A non-exhaustive cursory discussion of microencapsulation involving polycondensation reactions forming poly(urethane-urea) linkage is provided. Urethane polymers are formed by reaction of polyisocyanates and polyols which create the urethane chemical linkage. The closely related polyureas are synthesized from polyisocyanates and polyamines, producing urea linkages. Although many polyurethanes contain both urethane and urea groups and are therefore more property termed polyurethane/ureas, it is common to refer to such polymers under the blanket term polyurethanes. The polyol and/or polyamine in these polymers often comprise the majority mass component, so the terms polyurethane, polyurethane/urea, and polyurea refer to the corresponding chemical group linkage and not the whole of the polymer backbone. The urethane and urea functional groups, however do impart most of the important physical properties.

Linear urethane polymer chains are often comprised of high-molecular-weight polyol(s), isocyanate(s), and chain extender(s). The polyol forms the so-called *soft segment* of the backbone, while the isocyanate and chain extender form the *hard segment.*

There are several ways to categorize isocyanates, but the broadest delineation is aromatic versus aliphatic. Aromatic methylene diphenyl diisocyanate (MDI), polymeric methylene diphenyl diisocyanate (PMDI) and toluene diisocyanate (TDI) constitute by far the largest worldwide volume of isocyanates manufactured. Two characteristics stand out with these compounds. First, their aromaticity causes materials based on them to absorb ultraviolet (UV) radiation and second important characteristic of aromatic isocyanates is that they are much more reactive than aliphatics due to delocalization of electron density into the aromatic ring.

The polyols makes many contributions to the finished polymer, including flexibility, softness, low-temperature properties and processing characteristics. Polyether polyols are predominant in urethanes because they are available in a wide range of molecular weight, viscosity, functionality, and composition.

Chain extenders are low-molecular-weight diols or diamines used to increase urethane and/or urea content in the final polymer. Chain extender molecules can be relatively long or short, aromatic or aliphatic, hydrophilic or hydrophobic. Because they are low molecular weight and react with isocyanate, chain extenders become part of the so-called hard segment in the resultant polymer and can dramatically influence hardness, modulus, crystallinity and so on. For example, diamine chain extenders can be used as rheology modifiers because they react rapidly with isocyanate (before the polyol) to build molecular weight and viscosity.

Crosslinking agents by definition have functionality ≥ 3, and any such reactants in a formulation, including isocyanates and polyols, are crosslinkers. The term crosslinker is sometimes inappropriately used to denote what is really a two-functional chain extender. The two most important features of a crosslinking molecule are functionality and molecular weight. Low-molecular-weight molecules are more effective at crosslinking the polymer matrix on a molar basis and are usually used at low concentrations. Higher molecular weight compounds, such as polyether triols, are often not thought of as crosslinkers per se, but their influences cannot be discounted because they do contribute to crosslink density and can increase resistance to swelling, improve tear strength, and decrease low temperature flexibility.

Without being held to any one theory or mode of operation, the synthesis of polyurethane-urea microcapsules is believed to takes place according reactions described above.

In the first step two mixtures are prepared separately (i.e., an aqueous and oil phase) and then mixed together. The aqueous phase comprises of siccative and water soluble amine and/or polyol dissolved in the aqueous solvent, while the oil phase is prepared by surfactants dissolving in the hydrocarbon solvent. Using a high shear mixer in the second step, a water-in-oil type of an emulsion is prepared by combining the aqueous and oil phases. For suitable stabilisation, proper surfactants are needed here as the emulsion should be stable for a few hours at temperature up to 90°C. Nonionic surfactants with HLB < 5 are preferred. One non-ionic surfactant useful in this regard are the class of esters known as sorbitan esters (also known as Span® surfactants). The emulsion is even more stable when a combination of more than one type of sorbitan ester is employed in the reaction.

The droplet size of the aqueous phase is dependent upon several factors, including the rate of mixing in addition to the surfactant type and concentration. With higher shear mixing, smaller and homogeneous droplets are obtained.

No reaction occurs until the addition of at least one isocyanate. Different types of isocyanates could be used; although it has been found that one particularly useful isocyanate is dicyclohexylmethane diisocyanate (known also as HMDI). Optionally toluene diisocyanate (TDI) could also be added or in combination thereof.

At this point, an amine terminated chain may reacts with an isocyanate end-group to form a urea linkage. Primary and secondary amines react readily with isocyanates without added catalyst due to their inherent nucleophilicity. As with hydroxyl compounds, aromatic amines reactions are slower than aliphatics because of electron delocalization. Electron-withdrawing groups ortho or para to the aromatic amine moiety reduce nucleophilicity even further. Primary amines are generally more reactive than the more hindered secondary amines. These trends allow a high degree of control over the reactivity of amines toward isocyanates and can be utilized to design formulations with specific processing characteristics.

Because of highly reactive amines typically used in the microencapsulation process, the reaction is started when the amine contacts an isocyanate. The reaction occurs even at room temperature.

Isocyanate groups react with hydroxyl groups (if they are present in the polyol reactant) to form polyurethane chains. Primary, secondary, and tertiary alcohols exhibit decreasing reactivity, in that order, due to increasing steric hindrance. Catalysts and/or elevated temperatures are usually required to drive the NCO-OH reactions to completion.

In the encapsulation of the [Fe(N2py3o-C1)Cl]Cl siccative ("FeLT®") as prepared as described in WO 02/48301, polyols are not preferred in that a more elastic polymer membrane is obtained which at times, makes it more difficult to trigger the siccative release. Therefore it is preferred that the capsules consist of polyurea linkages and not polyurethane linkages.

Isocyanate groups react with water diffused from the aqueous phase to form an amino acid group which is unstable and dissociates into a chain with amine end-group and carbon dioxide. The extent of carbon dioxide formation by this reaction contributes significantly to the porosity of microspheres.

Isocyanate end-groups may react with urethane NH groups to form an allophanate and isocyanate end-groups may react with a urea NH to form a biuret. These reactions are believed to cause interconnection and crosslinking of chains.

After this stage no further reduction of droplets size is possible because liquid droplets convert into solid capsules. In the last step of the polymerisation reaction, the temperature is typically increased. Constant moderate mixing is necessary because of tendency of capsules to form agglomerates which became chemical bonded and no separation is possible later. After completion of reaction the dispersion is cooled down.

In addition to the above, various processes for microencapsulating material are available. These processes can be divided into three categories - physical, phase separation and interfacial reaction. In the physical methods category, microcapsule wall material and core particles are physically brought together and the wall material flows around the core particle to form the microcapsule. In the phase separation category, microcapsules are formed by emulsifying or dispersing the core material in an immiscible continuous phase in which the wall material is dissolved and caused to physically separate from the continuous phase, such as by coacervation, and deposit around the core particles. In the interfacial reaction category, the core material is emulsified or dispersed in an immiscible continuous phase, and then an interfacial polymerization reaction is caused to take place at the surface of the core particles thereby forming microcapsules.

There are various types of interfacial polymerisation process but all involve reaction at the interface of a dispersed phase and a continuous phase in an emulsion system. In one type of interfacial polymerisation process, the in situ interfacial polymerisation reaction, all of the wall-forming monomers are contained in one phase of the emulsion. In situ condensation of the wall forming materials and curing of the polymers at the oil/water phase interface may be initiated by heating the emulsion to a temperature of between about 20°C to about 100°C and optionally adjusting the pH. The heating occurs for a sufficient period of time to allow substantial completion of in situ condensation of the prepolymers to convert the droplets to capsules consisting of solid polymer shells entrapping the core materials. One type of catalysts microcapsule prepared by in situ condensation and known in the art is exemplified in U.S. patent 4,956,129 and WO/1998/028975.

Another type of microencapsulation process is the interfacial condensation polymerisation reaction where reactants are contained in the oil and aqueous phase respectively are brought together at the oil/water interface where they react by condensation to form the microcapsule wall. The resulting capsule skin may be produced as a polyamide, polysulfonamide, polyester, polycarbonate, polyurethane, polyurea or mixtures of reactants in one or both phases so as to yield corresponding condensation copolymers. U.S. patent 4,874,832 and EP 1840145 are illustrative of encapsulation by interfacial polycondensation.

A microencapsulated siccative solution is preferably prepared by an interfacial polycondensation process and suitable microcapsules wall materials are selected from the polyureas, polyurethanes and combinations thereof.

In practice, microencapsulation by the interfacial reaction is carried out by initially preparing an emulsion in which the disperse phase consists of a solution of the siccative in one of the reactants required for the synthesis of the polymer. Typically the dispersed phase is an aqueous phase and the continuous phase is an oil phase but interfacial polymerisation reactions at the interface of a continuous oil phase and a dispersed aqueous phase are also possible.

Thus for example a water-in-oil emulsion is prepared by dispersing an aqueous phase (comprising water, siccative and water soluble reactants) into a continuous organic phase comprising organic solvents, surfactants and preferably other additives. The aqueous phase is dispersed as discrete droplets throughout the organic phase by means of emulsification. The second, solvent soluble reactant for the synthesis of the polymer is then added to the emulsion thus prepared. By the reaction of the two components, the polymer is formed at the phase interface of the dispersed spherical droplets and forms the shell of the microcapsule. Some other additives may be also added in order to adjust capsules dispersion properties and final coating formulations.

Water soluble reactants are amines, which in turn react with unhydrolised polymers to form the polyurea microcapsule wall and/or polyols to produce an amount of a polyurethane wall.

Preferred amines which are suitable for interfacial reaction with the isocyanates and which also function as "crosslinking agents" are aliphatic, primary or secondary di- and polyamines, for example: ethylene-1,2-diamine, bis(3-aminopropyl)amine, hydrazine-2-ethanol, bis(2-methylaminoethyl)methylamine, 1,4-diaminocyclohexane, 3-amino-1-methyl-aminopropane, N-hydroxy-ethyl-ethylene-diamine, N-methyl-bis(3-aminopropyl)amine, 1,4-diamino-n-butane, 1,6-diamino-n-hexane, ethylene-1,2-diamine-N-ethyl-sulphonic acid (as an alkali metal salt), 1-amino-ethylene-1,2-diamine and bis(N,N'-aminoethyl)ethylene-1,2-diamine. In the context of the invention, preferred amines are diethylenetriamine, hexamethylenediamine and triethanolamine and/or mixtures thereof.

Suitable polyols used for polyurethanic wall formation could include simple low molecular weight aliphatic di, tri or tetraols or polymeric polyols. The polymeric polyols may be members of any class of polymeric polyols, for example: polyether, polycarbonates, polyesters and polyesteramides. The diols suitable for use in the present invention are ethyleneglycol, diethylene glycol, propylene glycol, 1,4-butane diol, 1,4 hexane diol, dipropylene glycol, cyclohexyl 1,4 dimethanol, 1,8 octane diol and polyols such as poly (ethylene glycols), poly (propylene glycols) and their copolymers, poly (tetramethylene glycols), butyleneglycol,

A wide variety of materials suitable for use as the oil phase will occur to one skilled in the art. Examples include, diesel oil, isoparaffin, aromatic solvents, particularly alkyl substituted benzenes such as toluene, xylene or propyl benzene fractions, and mixed napthalene and alkyl napthalene fractions; mineral oils, white oil, castor oil, sunflower oil, kerosene, dialkyl amides of fatty acids, particularly the dimethyl amides of fatty acids such as caprylic acid; chlorinated aliphatic and aromatic hydrocarbons such as 1,1,1-trichloroethane and chlorobenzene; esters of glycol derivatives, such as the acetate of the n-butyl, ethyl, or methyl ether of diethylene glycol; the acetate of the methyl ether of dipropylene glycol; ketones such as methyl ethyl ketone, methyl isobutyl ketone, isophorone and trimethylcyclohexanone (dihydroisophorone); ethers such as methyl tert-butyl ether and cyclopentyl methyl ether and the acetate products such as ethyl, hexyl, or heptyl acetate. Organic liquids conventionally preferred for use in microencapsulation processes are xylene, diesel oil, isoparaffins and alkyl substituted benzenes. Preferred solvent used in the present invention are isoparaffins and aromatic solvents.

The organic reactants used in this process are isocyanates includes both aromatic and aliphatic mono and poly functional isocyanates. Examples of suitable isocyanates include the following: diphenylmethane diisocyanates, toluene diisocyanates, xylylene diisocyanates, dicyclohexylmethane diisocyanates, tetramethylxylene diisocyanate, naphthalene diisocyanate, para-phenylene diisocyanate, tetramethylene diisocyanate, hexamethylene diisocyanate, isophorone diisocyanate and mixtures thereof. Polymeric polyisocyanates, biurets, blocked polyisocyanates, and mixtures of polyisocyanates with melting point modifiers can also be used. It may be desirable to use combinations of the above mentioned polyisocyanates. Preferred isocyanates are dicyclohexylmethane diisocyanates, toluene diisocyanate and mixtures with other difunctional aromatic or aliphatic isocyanates.

The surface-active agent can be any of the wide variety of compounds known to be useful for lowering the surface tension of a fluid interface. Nonionic and anionic types are useful. Examples of nonionic agents are long chain alkyl and mercaptan polyethoxy alcohols, alkylaryl polyethoxy alcohols, alkylaryl polyether alcohols, alkyl polyether alcohols, polyoxyethylene sorbitan fatty acid esters, polyoxyethylene ethers, and polyethylene glycol esters with fatty or rosin acids. Examples of anionic agents are the calcium, amine, alkanolamine, and alkali salts of alkyl and alkylaryl sulfonates; vegetable sulfonates; and ethoxylated and propoxylated mono- and diethers of phosphoric acid. Blends of surface-active agents are also useful. Preferred surface-active agents are polyethelene glycol ethers of linear alcohols and alkali salts of alkyl and alkylaryl sulfonates.

Typical examples of surfactants which can be used to facilitate formation of the water-in-oil emulsion are commercially available surfactants like octylphenol ethoxylates (e.g. Triton™ X-15, Triton™ X-35), sorbitan esters and ethoxylated sorbitan esters (e.g. Span® 20, Span® 40, Span® 60, Span® 80, Span® 85) or ethoxylated fatty alcohols (e.g. Brij1M 92, Brij™ 72, Brij™ 52, Synperonics) and combinations thereof.

As the emulsifying agent capable of forming a stable oil-in-water emulsion, for example an anionic surfactant (e.g. sodium oleate, sodium stearate, sodium lauryl sulfate, etc.), a nonionic surfactant (e.g. polyoxyethylenesorbitan fatty acid ester (Tween™ 80, Tween™ 60) polyvinyl pyrrolidone, octylphenol ethoxylates (e.g. Triton™ X-45, Triton™ X-100), polyvinyl alcohol, carboxymethylcellulose, lecithin or gelatin. Such emulsifiers may be used either atone or in combination.

Examples of suitable catalysts include tertiary amines, organometallic tin compounds, triethylene diamine, dibutyl tin dilaurate, dibutylbis(laurylthio)stannate, dibutyltinbis(isooctylmercapto acetate), dibutyltinbis(isooctyl maleate), dimethylcyclohexylamine, and 1,8-diazabiscyclo[5,4,0]undec-7-ene (DBU).

Other ingredients or additives may be employed with the coating composition of the invention to impart to or modify particular characteristics of the composition. The additives should be added only at a level that does not materially adversely interfere with the stability of the microencapsulated siccative or the adhesion of coatings prepared from the composition. For example, chain-extension agents (e.g., short chain polyols such as ethylene glycol or butanediol); fillers; thermoplastic resins; defoamers; surface active components; stabilisers; plasticizers; antioxidants; pigments; U.V. absorbers; and adhesion promoters such as silanes, and the like may be included to modify set time, open time, green strength build-up, tack, flexibility, adhesion, ductility, adhesive strength, gloss; elongation, pliability, buckling strength, crease resistance; as well as increased resistance to solvents, acids, bases, light, heat, cold, and sudden temperature changes, etc. Such materials are well known in the art.

The result of the microencapsulation process is a dispersion of microcapsules in an organic solvent in which the microcapsule comprises an aqueous solution of the metal siccative as core with a polymer wall or a water dispersion of microcapsules in which the microcapsule comprises a solvent solution of the metal siccative as core with a polymer wall.

Such a microcapsule dispersion is typically added to an oxidatively curable coating composition so that the concentration of transition metal ions in the resultant composition are at a concentration, based on the weight of the oxidatively curable coating, of between 0.0001 wt% and 0.1 wt%. Typically the component(s) of a complex comprising a transition metal ion and a polydentate accelerant ligand will be dissolved in water such that the amount of the component(s) is 0.001 wt% to 4 wt%, with respect to the weight of the water.

The metal drier, as described herein, e.g. as a pre-formed complex of transition metal ion(s) and polydentate accelerant ligand(s), is typically dissolved in water at a concentration of 0.001 wt% to 8 wt% based on the weight of water. The actual amount of the metal drier depends on the number of metal atoms present in the metal drier molecule and its total molecular weight. For example, if the molecular weight of a desired complex is 560 and contains one iron ion (mw 56) and a level of 0.1% of iron is mentioned, the amount of compound dissolved in water is 1 % (w/w) or 10 gram/kg water. If the complex is not preformed but formed *in* situ, a metal salt will also be typically dissolved in water at a concentration of 0.001 to 1 wt% based on the metal ion to water ratio. An appropriate amount of polydentate accelerant ligand can then be added to form the desired complex.

After preparation, a solution of the metal drier in water may then be microencapsulated to give a slurry or dispersion of microcapsules in an organic solvent.

The microcapsules can be produced continuously or batchwise. In general, dispersion equipment which produces a shear gradient is used. Examples of these are blade, basket and high-speed stirrers, colloid mills, homogenizers, ultrasound dispersers, nozzles and steel nozzles. The magnitude of the turbulence during mixing is the primary determining factor for the diameter of the microcapsules obtained. Capsules of sizes from 0.1 to 1,000 µm can be produced. Capsules having diameters from 0.1 to 100 µm are preferred. Microcapsules content in the dispersion may vary from 1% to 60% of the dispersion, preferably from 10% to 40%.

The molar ratio of amine / isocyanate has been determined to range from about 0.05 to 0.5/1. For the more effective non-ionic surfactants / emulsifiers, the HLB number is preferably < 5.0. The weight ratio of the membrane/solid capsule has been determined to range from 0.01 to 0.4, more preferably from 0.05 to 0.2.

### DRYING CATALYSTS

Often, the metal drier, sometimes referred to as a siccative, is present in the curable liquid composition at a concentration of from 0.0001 to 0.1 % w/w, more typically from 0.001 to 0.1 % w/w, more typically from 0.002 to 0.05% w/w, even more typically from 0.005 to 0.05 %w/w.

The polydentate accelerant ligand, e.g. a tetradentate, pentadentate or hexadentate nitrogen donor ligand, may be built up within any organic structure which will support coordinating nitrogen atoms. For example one can take a basic tridentate ligand such as 1,4,7-triazacyclononane (TACN), optionally substituted with further nitrogen co-ordinating groups, e.g., -CH₂-CH₂-NH₂, -CH₂-Py (Py = pyridyl, typically 2-pyridyl), covalently bound to one or more of the nitrogen atoms within the tridentate ligand (e.g. TACN) or aliphatic groups (e.g. one or more of the ethylene diradicals in TACN).

If present, the iron ions may be selected from Fe(II) and/or Fe(III); manganese ions may be selected from Mn(II), Mn(III), and Mn(IV), or mixtures thereof.

The polydentate accelerant ligand (L) may be provided, for example, in complexes of one or more of the formulae: [MnLCl₂]; [FeLCl₂]; [FeLCI]CI; [FeL(H₂O)](PF₆)₂; [FeL]Cl₂, [FeLCl]PF₆ and [FeL(H₂O)](BF₄)₂. It will be understood that the counteranions shown in the complexes may equally coordinate to manganese.

Below are described classes of polydentate accelerant ligand transition metal driers that are iron or manganese complexes of tetradentate, pentadentate or hexadentate nitrogen donor ligands which may be used in the invention.

If unspecified, the length of an alkyl chain is C₁-C₈ alkyl and preferably is linear. If unspecified, the length of an alkenyl or alkynyl chain is C₂-C₈ and preferably is linear. If unspecified an aryl group is a phenyl group.

### BISPIDON

The bispidon class are typically in the form of an iron transition metal catalyst. The bispidon ligand is preferably of the formula: 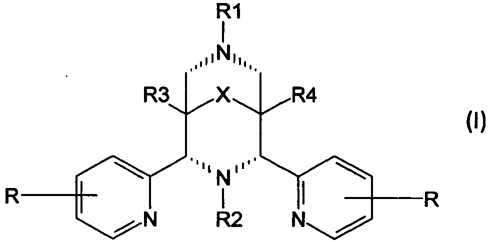 wherein:
- each R: is independently selected from the group consisting of hydrogen, F, Cl, Br, hydroxyl, C₁-₄-alkylO-, -NH-CO-H, -NH-CO-C₁-₄alkyl, -NH₂, -NH-C₁-₄alkyl, and C₁-₄alkyl;
- R1 and R2: are independently selected from the group consisting of C₁-₂₄alkyl, C₆₋₁₀aryl, and a group containing one or two heteroatoms (e.g. N, O or S) capable of coordinating to a transition metal;
- R3 and R4: are independently selected from the group consisting of hydrogen, C₁-₈alkyl, C₁-₈alkyl-O-C₁-₈alkyl, C₁-₈alkyl-O-C₆-₁₀aryl, C₆-₁₀aryl, C₁-₈hydroxyalkyl and-(CH₂)ₙC(O)OR5 wherein R5 is independently selected from hydrogen and C₁-₄alkyl,
- n: is from 0 to 4
- X: is selected from the group consisting of C=O, -[C(R6)₂]_{y}- wherein y is from 0 to 3; and
- each R6: is independently selected from the group consisting of hydrogen, hydroxyl, C₁-₄ alkoxy and C₁-₄ alkyl.

Often R3 = R4 and is selected from -C(O) -O-CH₃, -C(O) -O-CH₂CH₃, -C(O)-O-CH₂C₆H₅ and CH₂OH. Often the heteroatom capable of coordinating to a transition metal is provided by pyridin-2-ylmethyl optionally substituted by C₁-₄alkyl or an aliphatic amine optionally substituted by C₁-₈alkyl. Often X is C=O or C(OH)₂.

Typical groups for -R1 and -R2 are -CH₃, -C₂H₅, -C₃H₇, -benzyl, -C₄H₉, -C₆H₁₃,-C₈H₁₇, -C₁₂H₂₅, and -C₁₈H₃₇ and -pyridin-2-yl. An example of a class of bispidon is one in which at least one of R1 or R2 is pyridin-2-ylmethyl or benzyl or optionally alkyl-substituted amino-ethyl, e.g. pyridin-2-ylmethyl or *N*,*N*-dimethylamino-ethyl.

Two examples of bispidons are dimethyl 2,4-di-(2-pyridyl)-3-methyl-7-(pyridin-2-ylmethyl)-3,7-diaza-bicyclo[3.3.1]nonan-9-one-1,5-dicarboxylate (N2py3o-C1) and dimethyl 2,4-di-(2-pyridyl)-3-methyl-7-(N,N-dimethyl-amino-ethyl)-3,7-diaza-bicyclo[3.3.1]nonan-9-one-1,5-dicarboxylate and the corresponding iron complexes thereof. FeN2py3o-C1 may be prepared as described in WO 02/48301. Other examples of bispidons are those which, instead of having a methyl group at the 3-position, have longer alkyl chains (e.g. C₄-C₁₈alkyl or C₆-C₁₈alkyl chains) such as *iso*butyl, (*n*-hexyl) C6, (*n*-octyl) C8, (*n*-dodecyl) C12, (*n*-tetradecyl) C14, (*n*-octadecyl) C18; these may be prepared in an analogous manner.

Examples of tetradentate bispidons are described in WO 00/60045 and examples of pentadentate and hexadentate bispidons are described in WO 02/48301, WO 03/104379 and WO 09/010129.

### N4py type

The N4py type ligands are typically in the form of an iron transition metal catalyst. The N4py type ligands are typically of the formula (II): 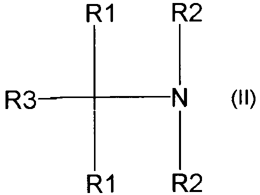 wherein:
- each R1 and R2: independently represents -R4-R5;
- R3: represents hydrogen, C₁₋₈-alkyl, aryl selected from homoaromatic compounds having a molecular weight under 300, or C₇₋₄₀ arylalkyl, or-R4-R5,
- each R4: independently represents a single bond or a linear or branched C₁₋₈-alkyl-substituted-C₂₋₆-alkylene, C₂₋₆-alkenylene, C₂₋₆-oxyalkylene, C₂₋₆-aminoalkylene, C₂₋₆-alkenyl ether, C₂₋₆-carboxylic ester or C₂₋₆-carboxylic amide, and
- each R5: independently represents an optionally N-alkyl-substituted aminoalkyl group or an optionally alkyl-substituted heteroaryl: selected from the group consisting of pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl.

Accordingly to some embodiments R1 or R2 represents pyridin-2-yl; or R2 or R1 represents 2-amino-ethyl, 2-(N-(m)ethyl)amino-ethyl or 2-(N,N-di(m)ethyl)amino-ethyl. If substituted, R5 often represents 3-methyl pyridin-2-yl. R3 preferably represents hydrogen, benzyl or methyl.

Examples of N4Py ligands include N4Py itself (i.e. N, N-bis(pyridin-2-yl-methyl)-bis(pyridin-2-yl)methylamine which is described in WO 95/34628); and MeN4py (*i.e*. N,N-bis(pyridin-2-yl-methyl-1,1-bis(pyridin-2-yl)-1-aminoethane) and BzN4py (N,N-bis(pyridin-2-yl-methyl-1,1-bis(pyridin-2-yl)-2-phenyl-1-aminoethane) which are described in EP 0909809.

### TACN-type

The TACN-Nx are preferably in the form of an iron transition metal catalyst. These ligands are based on a 1,4,7-triazacyclononane (TACN) structure but have one or more pendent nitrogen groups that serve to complex with the transition metal to provide a tetradentate, pentadentate or hexadentate ligand. According to some embodiments of the TACN-Nx type of ligand, the TACN scaffold has two pendent nitrogen-containing groups that complex with the transition metal (TACN-N₂). TACN-Nx ligands are typically of the formula (III): 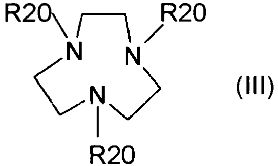 wherein
- each R20: is independently selected from: C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, or C₇₋₄₀-arylalkyl group optionally substituted with a substituent selected from hydroxy, alkoxy, phenoxy, carboxylate, carboxamide, carboxylic ester, sulfonate, amine, alkylamine and N⁺(R21)₃,
- R21: is selected from hydrogen, C₁₋₈-alkyl, C₂₋₆-alkenyl, C₇₋₄₀-arylalkyl, arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R22,
- Y: is independently selected from H, CH₃, C₂H₅, C₃H₇ and
- R22: is independently selected from C₁₋₈-alkyl-substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and
wherein at least one of R20 is a -CY₂-R22.

R22 is typically selected from optionally alkyl-substituted pyridin-2-yl, imidazol-4-yl, pyrazol-1-yl, quinolin-2-yl groups. R22 is often either a pyridin-2-yl or a quinolin-2-yl.

### CYCLAM AND CROSS-BRIDGED LIGANDS

The cyclam and cross-bridged ligands are preferably in the form of a manganese transition metal catalyst. The cyclam ligand is typically of the formula (IV): 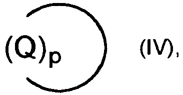 wherein:
- Q: is independently selected from 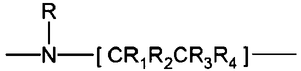 and 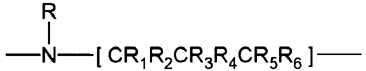
- p: is 4;
- R: is independently selected from: hydrogen, C₁₋₆-alkyl, CH₂CH₂OH pyridin-2-ylmethyl, and CH₂COOH, or one of R is linked to the N of another Q via an ethylene bridge; and
- R1, R2, R3, R4, R5 and R6: are independently selected from: H, C₁₋₄-alkyl, and C₁₋₄-alkylhydroxy.

Examples of non-cross-bridged ligands are 1,4,8,11-tetraazacyclotetradecane (cyclam), 1,4,8,11-tetramethyl-1,4,8,11-tetraazacyclotetradecane (Me4cyclam), 1,4,7,10-tetraazacyclododecane (cyclen), 1,4,7,10-tetramethyl-1,4,7,10-tetraazacyclododecane (Me4cyclen), and 1,4,7,10-tetrakis(pyridine-2ylmethyl)-1,4,7,10-tetraazacyclododecane (Py4cyclen). With Py4cyclen the iron complex is preferred.

A preferred cross-bridged ligand is of the formula (V): 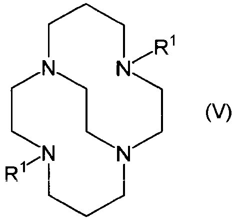 wherein
- R¹: is independently selected from H, C₁₋₂₀ alkyl, C₇₋₄₀-alkylaryl, C₂₋₆-alkenyl or C₂₋₆-alkynyl.

All nitrogen atoms in the macropolycyclic rings may be coordinated with a transition metal. In formula (VI), each R¹ may be the same. Where each R¹ is Me, this provides the ligand 5,12-dimethyl-1,5,8,12-tetraaza-bicyclo[6.6.2]hexadecane (L) of which the complex [Mn(L)Cl₂] may be synthesised according to WO98/39098. Where each R1 = benzyl, this is the ligand 5,12-dibenzyl-1,5,8,12-tetraaza-bicyclo[6.6.2]hexadecane (L') of which the complex [Mn(L')Cl₂] may be synthesised as described in WO 98/39098. Further suitable crossed-bridged ligands are described in WO98/39098.

### TRISPICEN-type

The trispicens are preferably in the form of an iron transition metal catalyst. The trispicen type ligands are preferably of the formula (VI):

R17R17N-X-NR17R17 (VI),

wherein:
- X: is selected from -CH₂CH₂-, -CH₂CH₂CH₂-, -CH₂C(OH)HCH₂-;
- each R17: independently represents a group selected from: R17, C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, and C₇₋₄₀ arylalkyl groups optionally substituted with a substituent selected from hydroxy, alkoxy, phenoxy, carboxylate, carboxamide, carboxylic ester, sulfonate, amine, alkylamine and N⁺(R19)₃, wherein
- R19: is selected from hydrogen, C₁₋₈-alkyl, C₂₋₆-alkenyl, C₇₋₄₀-arylalkyl, C₇₋₄₀-arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R18, in which each Y is independently selected from H, CH₃, C₂H₅, C₃H₇ and R18 is independently selected from an optionally substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and at least two of R17 are -CY₂-R18.

The heteroatom donor group is preferably pyridinyl, e.g. 2-pyridinyl, optionally substituted by -C₁-C₄-alkyl.

Other preferred heteroatom donor groups are imidazol-2-yl, 1-methyl-imidazol-2-yl, 4-methyl-imidazol-2-yl, imidazol-4-yl, 2-methyl-imidazol-4-yl, 1-methyl-imidazol-4-yl, benzimidazol-2-yl and 1-methyl-benzimidazol-2-yl. Preferably three of R17 are CY₂-R18.

The ligand Tpen (N, N, N', N'-tetra(pyridin-2-yl-methyl)ethylenediamine) is disclosed in WO 97/48787. Other suitable trispicens are described in WO 02/077145 and EP 1001009A.

Preferably, the ligand is selected from dimethyl 2,4-di-(2-pyridyl)-3-methyl-7-(pyridin-2-ylmethyl)-3,7-diaza-bicyclo[3.3.1]nonan-9-one-1,5-dicarboxylate, dimethyl 2,4-di-(2-pyridyl)-3-methyl-7-(N,N-dimethyl-amino-ethyl)-3,7-diaza-bicyclo[3.3.1]nonan-9-one-1,5-dicarboxylate, 5,12-dimethyl-1,5,8,12-tetraaza-bicyclo[6.6.2]hexadecane, 5,12-dibenzyl-1,5,8,12-tetraaza-bicyclo[6.6.2]hexadecane, N,N-bis(pyridin-2-yl-methyl-1,1-bis(pyridin-2-yl)-1-aminoethane, and N,N-bis(pyridin-2-yl-methyl-1,1-bis(pyridin-2-yl)-2-phenyl-1-aminoethane.

Of the non-bispidon type siccatives the following are most preferred: 5,12-dimethyl-1,5,8,12-tetraaza-bicyclo[6.6.2]hexadecane, 5,12-dibenzyl-1,5,8,12-tetraaza-bicyclo[6.6.2]hexadecane, 1,4,8,11-tetraazacyclotetradecane, 1,4,8,11-tetramethyl-1,4,8,11-tetraazacyclotetradecane, 1,4,7,10-tetraazacyclododecane, 1,4,7,10-tetramethyl-1,4,7,10-tetraazacyclododecane, and 1,4,7,10-tetrakis(pyridine-2ylmethyl)-1,4,7,10-tetraazacyclododecane, N,N-bis(pyridin-2-yl-methyl)-bis(pyridin-2-yl)methylamine, N,N-bis(pyridin-2-yl-methyl-1,1-bis(pyridin-2-yl)-1-aminoethane, N,N-bis(pyridin-2-yl-methyl-1,1-bis(pyridin-2-yl)-2-phenyl-1-aminoethane and 1,4,7-trimethyl-1,4,7-triazacyclononane.

According to embodiments of the present invention, the oxidatively curable solvent-based coating agent compositions of the invention may contain an antiskinning compound or antioxidant. Examples include, but are not limited to, methylethylketoxime, acetonoxime, butyraldoxime, dialkylhydroxylamine, ascorbic acid, isoascorbate materials as described in WO 2007/024582, acetylacetonate, ammonia, vitamin E (tocopherol), hydroxylamine, triethylamine, dimethylethanolamine, o-cyclohexylphenol, p-cyclohexylphenol and 2-t-butyl-4-methylphenol. In some embodiments, where an antiskinning compound is present this is methylethylketoxime, acetonoxime, butyraldoxime, dialkylhydroxylamine, ammonia, hydroxylamine, triethylamine, dimethylethanolamine, o-cyclohexylphenol, p-cyclohexylphenol, 2-t-butyl-4-methylphenol, or a mixture thereof.

Where present, the concentration of antioxidant or antiskinning compound applied is preferably between 0.001 and 2 wt%.

Additionally, one or more auxiliary driers (sometimes referred to as secondary driers) may be present in the curable composition. These may include fatty acid soaps of zirconium, bismuth, barium, vanadium, cerium, calcium, lithium, potassium, aluminium, strontium, and zinc. Preferred fatty acid soaps are octoates, neodecanoates, optionally alkyl-substituted hexanoates and naphthenates. Preferred metal ions in these soaps are zirconium, calcium, strontium and barium. Often such auxiliary driers advantageously diminish the effect of adsorption of the main metal drier on any solid particles often present in the curable composition. Other non-metal based auxiliary driers may also be present if desired. These may include, for example, thiol compounds, as described in US 2001/00089322 A or biomolecules as described in US 2005/0245639 A. Typical concentrations of these auxiliary dryers are between 0.01 wt% and 2.5 wt%.

The coating composition may furthermore contain one or more additives conventionally found in curable coating compositions, such as, but not limited to: UV stabilisers, dispersants, surfactants, inhibitors, fillers, antistatic agents, flame-retardants, lubricants, antifoaming agents, antifouling agents, bactericides, fungicides, algaecides, insecticides, extenders, plasticisers, antifreezing agents, waxes and thickeners.

The curable coating composition according to the various aspects of the invention may be used as a decorative coating, e.g. applied to wood substrates, such as door or window frames, or for other substrates such as those made of synthetic materials (such as plastics including elastomeric materials), concrete, leather, textile, glass, ceramic or metal. Thus disclosed herein is a method comprising applying to a substrate a composition according to the invention to a substrate. The thus applied composition may then be allowed to cure.

The following non-limiting examples will more fully illustrate the embodiments of this invention.

### EXPERIMENTAL

Dimethyl-2,4-di-(2-pyridyl)-3-methyl-7-(pyridin-2-ylmethyl)-3,7-diaza-bicyclo[3.3.1]nonan-9-one-1,5-dicarboxylate (N2py3o-C1) and the iron(II) complex thereof [Fe(N2py3o-C1)Cl]Cl ("FeLT®") was prepared as described in WO 02/48301.

Solutions of [Fe(N2py3o-C1)Cl]Cl in 1,2-propane-diol and water were prepared; the experiments with 1,2-propane-diol were the reference experiments. The solution in water was microencapsulated as follows:

### Example #1

A first solution A was prepared by mixing 249 g of a dearomatized hydrocarbon solvent a medium evaporating, high flash mineral spirit type hydrocarbon solvent having a high degree of general refining which gives this solvent its low level of impurities such as sulphur, olefins, benzene and total aromatics, and low odor, with a flash point >61°C, (sold commercially by Shell Chemicals under the trade name Shellsol™ D60), 6 g sorbitan monooleate (sold commercially under the trade name Span® 80) and 3 g sorbitan trioleate (sold commercially under the trade name Span®85). A second solution B was prepared by mixing 99.8 g of a 2% solution of [Fe(N2py3o-C1)Cl]Cl in water and 1 g diethylenetriamine. A third solution C was prepared by mixing 6 g dicyclohexylmethane diisocyanate and 6 g Shellsol™ D60.

Solution B was emulsified in solution A using a high shear mixer. The mixing with high shear mixer (15,100 rpm) was continued for 40 min at room temperature and then the mixing speed was reduced and solution C was added. After 1 hour the emulsion was heated up to 80°C and mixed (400 rpm) for 2 hours at this temperature. At the end, the dispersion of [Fe(N2py3o-C1)Cl]Cl in water microcapsules was cooled to room temperature to give a slurry containing ∼28% capsules in hydrocarbon solvent - equivalent to ∼0.5% of [Fe(N2py3o-C1)CI]CI.

### Example #2

A first solution A was prepared by mixing 249 g dearomatized hydrocarbon solvent (Shellsol™ D60), 6 g sorbitan monoleate (Span®80) and 3 g sorbitan trioleate (Span®85). A second solution B was prepared by mixing 99.8 g of a 1% solution of [Fe(N2py3o-C1)CI]CI (FeLT®) in water and 0.5 g diethylenetriamine. A third solution C was prepared by mixing 6 g dicyclohexylmethane diisocyanate and 6 g dearomatized hydrocarbon solvent (Shellsol™ D60).

Solution B was emulsified in solution A using a high shear mixer. The mixing with high shear mixer (15,100 rpm) was continued for 40 min at room temperature and then the mixing speed was reduced and solution C was added. After 1 hour the emulsion was heated up to 80°C and mixed (400 rpm) for 2 hours at this temperature. At the end, the dispersion of [Fe(N2py3o-C1)Cl]Cl in water microcapsules was cooled to the room temperature to give a slurry containing ∼28% capsules in hydrocarbon solvent - equivalent to ∼0.25% of [Fe(N2py3o-C1)CI]CI.

### Example #3

A first solution A was prepared by mixing 249 g dearomatized hydrocarbon solvent (Shellsol™ D60), 6 g sorbitan monoleate (Span®80) and 3 g sorbitan trioleate (Span®85). A second solution B was prepared by mixing 99.8 g of a 2% solution of [Fe(N2py3o-C1)CI]CI (FeLT®) in water and 0.5 g diethylenetriamine. A third solution C was prepared by mixing 6 g dicyclohexylmethane diisocyanate and 6 g dearomatized hydrocarbon solvent (Shellsol™ D60).

Solution B was emulsified in solution A using a high shear mixer. The mixing with high shear mixer (18,100 rpm) was continued for 40 min at room temperature and then the mixing speed was reduced and solution C was added. After 1 hour the emulsion was heated up to 80°C and mixed (400 rpm) for 2 hours at this temperature. At the end the dispersion of [Fe(N2py3o-C1)Cl]Cl in water microcapsules was cooled to the room temperature to give a slurry containing ∼28% capsules hydrocarbon solvent - equivalent to ∼0.5% of [Fe(N2py3o-C1)CI]CI.

### Example #4

A first solution A was prepared by mixing 249 g dearomatized hydrocarbon solvent (Shellsol™ D60), 6 g sorbitan monoleate (Span®80) and 3 g sorbitan trioleate (Span®85). A second solution B was prepared by mixing 99.8 g of a 2% solution of [Fe(N2py3o-C1)CI]CI (FeLT®) in water and 0.5 g diethylenetriamine. A third solution C was prepared by mixing 12 g dicyclohexylmethane diisocyanate and 12 g dearomatized hydrocarbon solvent (Shellsol™ D60).

Solution B was emulsified in solution A using a high shear mixer. The mixing with high shear mixer (18,100 rpm) was continued for 40 min at room temperature and then the mixing speed was reduced and solution C was added. After 1 hour the emulsion was heated up to 80°C and mixed (400 rpm) for 2 hours at this temperature. At the end the dispersion of [Fe(N2py3o-C1)Cl]Cl in water microcapsules was cooled to the room temperature to give a slurry containing ∼28% capsules in hydrocarbon solvent - equivalent to ∼0.5% of [Fe(N2py3o-C1)CI]CI.

### Example #5

A first solution A was prepared by mixing 249 g dearomatized hydrocarbon solvent (Shellsol™ D60), and 6 g sorbitan monoleate (Span® 80). A second solution B was prepared by mixing 99.8 g of a 4% solution of [Fe(N2py3o-C1)Cl]Cl (FeLT®) in water and 0.5 g diethylenetriamine. A third solution C was prepared by mixing 12 g dicyclohexylmethane diisocyanate and 12 g dearomatized hydrocarbon solvent (Shellsol™ D60). The reaction was carried out as described in *Example* #1.

### Example #6

A first solution A was prepared by mixing 249 g dearomatized hydrocarbon solvent (Shellsol™ D60), 6 g sorbitan monoleate (Span®80) and 3 g sorbitan trioleate (Span®85). A second solution B was prepared by mixing 99.8 g of a 4% solution of [Fe(N2py3o-C1)CI]CI (FeLT®) in water, 0.5 g diethylenetriamine and 3 g 1,4-butanediol. A third solution C was prepared by mixing 3.5 g dicyclohexylmethane diisocyanate, 3.5 g toluene diisocyanate and 17 g dearomatized hydrocarbon solvent (Shellsol™ D60). The reaction was carried out as described in *Example* #1.

### Example #7

A polyester shell would be formed with diols or polyols in the aqueous liquid and diacid or polyacid chlorides in the organic phase liquid. A first solution A would be prepared by mixing 320 g dearomatized hydrocarbon solvent (Shellsol™ D60), 7 g sorbitan monoleate (Span®80) and 3.4 g sorbitan trioleate (Span®85). A second solution B would be prepared by mixing 99.8 g of a 1% solution of [Fe(N2py3o-C1)Cl]Cl in water, 7.6 g of 1,5-pentanediol and 5.8 g of sodium hydroxide. Solution B would be emulsified in solution A using a high shear mixer. The mixing (20,000 rpm) would be continued for 10 min. at room temperature, followed by a reduction in mixing speed and the dropwise addition of 11.4 g adipoyl chloride. The emulsion would be mixed (500 rpm) for 1 hour at room temperature. A dispersion of [Fe(N2py3o-C1)Cl]Cl in water microcapsules should be obtained.

### Example #8

A polyamide shell would be formed by mixing diamines or polyamines in the water phase and diacid or polyacid chlorides in the organic phase liquid yield capsule walls consisting of polyamides. A first solution A would be prepared by mixing 330 g dearomatized hydrocarbon solvent (Shellsol™ D60), 7 g sorbitan monoleate (Span®80) and 3.4 g sorbitan trioleate (Span® 85). A second solution B would be prepared by mixing 99.8 g of a 1 % solution of [Fe(N2py3o-C1)Cl]Cl in water, 13.2 g of 1,6-hexamethylenediamine and 1.8 g of sodium hydroxide. A third solution C would be prepared by mixing 7.2 g adipoyl chloride and 7.2 g dearomatized hydrocarbon solvent (Shellsol™ D60). Solution B would be emulsified in solution A using a high shear mixer. The mixing (20,000 rpm) would be continued for 10 min at room temperature, followed by a reduction in mixing speed and the dropwise addition of solution C. The emulsion would be mixed (500 rpm) for one hour at room temperature. A dispersion of [Fe(N2py3o-C1)CI]CI in water microcapsules should be obtained.

### Example #9

A polysulfoamide shell would be formed using diamines or polyamines in the aqueous liquid and disulfonyl or polysulfonyl chlorides in the organic liquid produce a polysulfonamide capsule skin. A first solution A would be prepared by mixing 200 g dearomatized hydrocarbon solvent (Shellsol™ D60), and 6.8 g sorbitan monoleate (Span®80). A second solution B would be prepared by mixing 99.8 g of a 1% solution of [Fe(N2py3o-C1)Cl]Cl in water, 17.1 g of 11,6-hexamethylenediamine and 3.4 g of sodium hydroxide. A third solution C would be prepared by overnight mixing 7.2 g benzenedisulfonyl-chloride-m and 100 g dearomatized hydrocarbon solvent (Shellsol™ D60). Solution B would be emulsified in solution A using a high shear mixer. The mixing (18,000 rpm) would continue for 12 min. at room temperature, followed by a reduction in mixing speed, followed by the dropwise addition of solution C. The emulsion would be mixed (500 rpm) for two hours at room temperature. A dispersion of [Fe(N2py3o-C1)Cl]Cl in water microcapsules should be obtained.

As illustrated, a non-limiting, non-exhaustive exemplary list of examples of suitable diols are bisphenol A [2,2 bis-(p,p'-dihydroxy diphenyl)propane], hydroquinone, resorcinol, catechol, and various glycols such as ethylene glycol, pentanediol, hexanediol, dodecanediol, 1,4-butanediol and the like. Polyfunctional alcohols would include for example, triols and other polyols, e.g., pyrogallol (1,2,3-benzenetriol), phloroglucinol dihydrate, pentaerythritol, trimethylolpropane, 1,4,9,10-tetrahydroxyanthracene, 3,4-dihydroxyanthranol, diresorcinol and tetrahydroxyquinone. Examples of suitable difuntional acid derived shell wall components would include sebacoyl chloride, ethylene bischloroformate, phosgene, terephthaloyl chloride, adipoyl chloride, azelaoyl chloride (azelaic acid chloride), dodecanedioic acid chloride, dimer acid chloride, and 1,3-benzenesulfonyl dichloride. Polyfunctional compounds would include trimesoyl chloride, 1,2,4,5 benzene tetracid chloride, 1,3,5 benzene trisulfonyl chloride, trimer acid chloride, citric acid chloride, and 1,3,5 benzene trischloroformate.

### Additives

Antiskinning agents used were MEKO (methylethylketoxime - Borchi® NOX M2) and a proprietary amine (Ascinin® AS 0444) supplied by OMG Borchers GmbH, Langenfeld Germany.

The conventional primary and auxiliary driers used were cobalt 2-ethylhexanoate in hydrocarbon solvent (Octa-Soligen® Cobalt 10%), calcium 2-ethylhexanoate in hydrocarbon solvent (Octa-Soligen® Calcium 5% neutral) and zirconium 2-ethylhexanoate in hydrocarbon solvent (Octa-Soligen® Zirconium 12%) supplied by OMG Borchers GmbH, Langenfeld Germany.

### Formulation #1

To 800 g of a long oil length alkyd resin (85% in low aromatic hydrocarbon solvent, boiling range 160-200°C: Uralac® HS233 Q85 from DSM NeoResins BV) 100 g of low aromatic hydrocarbon solvent, boiling range 160-200°C and 75 g xylene were added under moderate agitation. For the drying and skinning tests driers were added to the formulation as a % of the entire formulation as listed in Table 1.

After one day of ageing, the drying time was determined after application of a thin layer of paint (100 µm) (23°C, 55% RH). Three levels of drying were determined: set, surface drying, through drying. To measure the drying time, a drying recorder was used (BK-3 Drying recorder), according to ASTM D5895.

Three levels of drying are defined:
(1) Set-dry: the needle gives a continuous penetration of the film (a line is visible), the paint begins to polymerize.
(2) Surface dry: the needle still penetrates the film, but shows an interrupted track.
(3) Through-dry: no lines are visible on the film.

The storage stability tests were conducted at room temperature in closed jars. Skinning on the surface of the paint formulation was determined after storage for one day and one week.

**Table 1**

| Drying time and skinning behaviour determined for encapsulated and unencapsulated [Fe(N2py3o-C1)Cl]Cl in paint Formulation 1. | | | | |
|---|---|---|---|---|
| | *Test-No.* | *1* | *2* | *3* |
| [Fe(N2py3o-C1)Cl]Cl in PG | % | 1 | - | - |
| [Fe(N2py3o-C1)Cl]Cl in water | % | - | 1 | - |
| Encapsulated [Fe(N2py3o-C1)CI]CI from Example #2 | % | - | - | 4 |
| drying times - hours | set | 2.5 | 4 | 6 |
| | surface dry | 3.5 | 5.5 | 7.5 |
| | through dry | 4 | 7.5 | 9.5 |
| skin formation 1 day (23°C) | | OK | OK | OK |
| skin formation 1 week (23°C) | | Skin | Skin | OK |

In test #1 above, a base line is established for the drying and skinning performance in a simple model paint system - a resin and solvent - no pigment or other additives such as antiskinning agent. A long oil length alkyd was chosen as these are normally more difficult to dry and this resin was known to have skinning problems. Of the drying times recorded, the surface dry is the most important from a practical perspective. Test #1 is the reference - a commercial product Borchi® OXY Coat with 1 % of FeLT in propyleneglycol ("PG"). Test #2 is similar, FeLT® dissolved in water. It is noted in Table 1 that while the drying of test #1 is slightly faster, both formulations are acceptable, however, both form a skin after 1 week which is not acceptable. Test #3 uses the encapsulated product made according to example #2. Because this has a lower level of FeLT® it has to be used at a higher amount to give a similar concentration of FeLT® in the paint. The drying time is longer but acceptable, and there are no signs of skin formation after 1 week storage. Howeverthis is a model system. In commercial formulations, secondary driers and antiskinning agents are used and illustrated in formulation #2.

The results shown in Table 1 demonstrate that when used at similar levels of active compound the encapsulated solution of [Fe(N2py3o-C1)Cl]Cl in water gives similar drying times to the unencapsulated [Fe(N2py3o-C1)Cl]Cl solutions in either water or PG, but much improved resistance to skinning.

### Formulation #2

To 800 g of a long oil alkyd resin (85% in low aromatic hydrocarbon solvent, boiling range 160-200°C: Uralac® HS233 Q85 from DSM NeoResins BV) 100 g of low aromatic hydrocarbon solvent, boiling range 160-200°C and 75 g xylene were added under moderate agitation.

For the drying and skinning tests driers, secondary driers and anti skinning agent were added at the % on final formulation as listed in Table 2. After one day of aging, the drying time was determined after application of a thin layer of paint (100 µm) (23°C, 55% RH). Three levels of drying were determined: set, surface drying, through drying (see under Formulation #1 for details). The storage stability tests were conducted at room temperature in closed jars. Skinning on the surface of the paint formulation was determined after storage for one day and eight weeks.

**Table 2**

| Drying time and skinning behaviour determined for encapsulated and unencapsulated [Fe(N2py3o-C1)Cl]Cl in paint Formulation #2 | | | | | |
|---|---|---|---|---|---|
| | *Test-No.* | *4* | *5* | *6* | *7* |
| Octa Soligen Cobalt 10 | % | 0.2 | - | - | - |
| [Fe(N2py3o-C1)Cl]Cl in PG | % | | *1* | - | - |
| Encapsulated [Fe(N2py3o-C1)Cl]Cl from Example #3 | % | - | - | 2 | - |
| Encapsulated [Fe(N2py3o-C1)Cl]Cl from Example #4 | % | - | - | - | 2 |
| Octa Soligen Calcium 5, neutral | % | 1 | 1 | 1 | 1 |
| Octa Soligen Zirconium 12 | % | 1 | 1 | 1 | 1 |
| Ascinin AS 0444 | % | 0.4 | 0.4 | 0.4 | 0.4 |
| drying times - hours | set | 4 | 1.5 | 2 | 1.5 |
| | surface dry | 5 | 2.5 | 3 | 3.5 |
| | through dry | 8 | 4.5 | 5.5 | 6 |
| skin formation 1 day (23°C) | | OK | Skin | OK | OK |
| skin formation 8 weeks (23°C) | | OK | Skin | OK | OK |

It should be noted that this was the same resin system as Formulation #1. Test #4 is a "normal" drier mixture containing cobalt, zirconium and calcium. It also contains an antiskinning agent, in this case a proprietary amine which does not have the toxicity of MEKO. The drying time is good and can be taken as the standard. No skinning is seen after 8 weeks storage. In contrast replacing the cobalt drier with the solution of FeLT® (test #5) while giving excellent drying shows a strong tendency to skin - after just 1 day even when an antiskinning agent is present. Tests #5 and #6 use the encapsulated FeLT® from Examples #3 and #4 in place of cobalt. As their concentration of FeLT® is lower, a higher amount is used to give an equivalent FeLT® concentration to test #5. As can be noted, the drying is the same (a difference of 1 hour is within experimental error) as the unencapsulated FeLT® - and better than with cobalt - but there was no skinning even after 8 weeks.

Table 2 shows that comparable drying behaviour to a conventional cobalt catalysed system is shown by both the encapsulated and unencapsulated forms of [Fe(N2py3o-C1)Cl]Cl, but even when an antiskinning agent is present the unencapsulated [Fe(N2py3o-C1)Cl]Cl quickly forms skin while the encapsulated [Fe(N2py3o-C1)Cl]Cl is resistant to skinning - similar to the conventional cobalt containing system.

However real paint often contains pigments and other additives such as dispersing aids (to help wet and disperse the pigment) and silica as a matting agent or rheology modifier. These materials can interact negatively with the driers so it is important to show good performance in these systems.

### Formulation #3

To 900 g of a medium oil length alkyd resin (55% in low aromatic white spirit/xylene 38/7; Setal™ A F48 from Nuplex) 225 g of a silica matting agent (Acematt® OK 412 from Evonik) and 49.5 g of low aromatic hydrocarbon solvent, boiling range 160-200°C were added. After agitating with a dissolver (peripheral speed 21 m/s) for 10 minutes, the dissolver speed was lowered and further 597 g of Setal™ A F48, 288 g of xylene and 154.5 g of low aromatic hydrocarbon solvent were added under moderate agitation.

Following the above, 528.7 g of long oil length alkyd resin(85% in low aromatic hydrocarbon resin, boiling range 160-200 °C: Uralac® HS233 Q85 from DSM NeoResins BV) and 561.8 g of a pigment concentrate (31.5% methoxypropylacetate, 3 % polyurethane dispersing agent (Borchi® Gen 1252; from OMG Borchers, 0.5%of fumed silica (Aerosil® R 972; from Evonik) and 65% titanium dioxide pigment (Kronos 2360 from Kronos) were added and homogenized under moderate agitation. For the drying and skinning tests driers, secondary driers and antiskinning agent were added as a percentage of the entire formulation as listed in Table 3.

After one day of aging, the drying time was determined after application of a thin layer of paint (100 µm) (23°C, 55% RH). Three levels of drying were determined: set, surface drying, through drying (see under Formulation #1 for details). The storage stability tests were conducted at room temperature and 40°C in closed jars. Skinning on the surface of the paint formulation was determined after storage for one day and one, two and three weeks.

**Table 3**

| Drying time and skinning behaviour determined for encapsulated and unencapsulated [Fe(N2py3o-C1)Cl]Cl in paint Formulation #3 | | | | | | | |
|---|---|---|---|---|---|---|---|
| | *Test-No.* | *8* | *9* | *10* | *11* | *12* | *13* |
| Octa Soligen Cobalt 10 | % | 0.2 | 0.2 | - | - | | |
| [Fe(N2py3o-C1)Cl]Cl in PG | % | | | *1* | *1* | - | - |
| Encapsulated [Fe(N2py3o-C1)Cl]Cl from Example #4 | % | - | - | - | - | 2 | 3 |
| Octa Soligen Calcium 5, neutral | % | 1 | 1 | 1 | 1 | 1 | 1 |
| Octa Soligen Zirconium 12 | % | 1.5 | 1.5 | 1.5 | 1.5 | 1.5 | 1.5 |
| Borchi Nox M2 | % | - | 0.2 | - | 0.2 | - | - |
| drying times - hours | set | 0.25 | 0.25 | 0.25 | 0.25 | 0.25 | 0.25 |
| | surface dry | 0.5 | 0.5 | 0.5 | 0.5 | 0.5 | 0.5 |
| | through dry | 1.5 | 1.25 | 1.75 | 2 | 2.75 | 2.25 |
| skin formation 1 day (23°C) | | Skin | OK | OK | OK | OK | OK |
| skin formation 1 day (40°C) | | Skin | OK | OK | OK | OK | OK |
| skin formation 1 week (23°C) | | Skin | OK | OK | OK | OK | OK |
| skin formation 1 weeks (40°C) | | Skin | OK | Skin | OK | OK | OK |
| skin formation 2 weeks (23°C) | | Skin | OK | OK | OK | OK | OK |
| skin formation 2 weeks (40°C) | | Skin | OK | Skin | OK | OK | OK |
| skin formation 3 weeks (23°C) | | Skin | OK | Skin | OK | OK | OK |
| skin formation 3 weeks (40°C) | | Skin | OK | Skin | OK | OK | OK |

The above formulation is based on a commercial matte white paint. The titanium dioxide is the pigment, silica is used to give the matte finish, and it contains a polyurethane dispersing agent to wet and disperse the pigment and fumed silica to modify the rheology. Where used the antiskinning agent is the industry standard - MEKO. The resin is a mix of the long oil alkyd used before and a medium oil length alkyd - this normally dries faster. Tests #8 and #9 use cobalt as the primary drier - drying is very fast but when no antiskinning agent is present, skinning is seen immediately. When MEKO is added the skinning is eliminated even after 3 weeks at 40°C - equivalent to about 3 months at room temperature. In tests #10 and #11, FeLT® is used in place of cobalt. Drying time is similar but again, when no MEKO is present skinning is seen quickly. However when the encapsulated FeLT® made in Example #4 is used to replace cobalt at several levels (tests #12 & #13) then comparable drying is seen but no skinning is seen even after 3 weeks at 40°C even when MEKO is not present.

Table 3 shows that this trend is also seen in a pigmented paint. The drying behaviour of the encapsulated and unencapsulated [Fe(N2py3o-C1)Cl]Cl is comparable with cobalt. When no antiskinning agent is present the cobalt and unencapsulated [Fe(N2py3o-C1)Cl]Cl systems skin rapidly but the encapsulated [Fe(N2py3o-C1)Cl]Cl is resistant to skinning.

The above experiments show that when encapsulated as decribed, FeLT® gives drying as good or comparable to cobalt and unencapsulated FeLT® in a range of systems - but resistance to skinning is improved to such a level that antiskinning agents may not be needed.

### Discussion

As is well recognized in the art, there are two main types of paint - those based on polymers (typically acrylics or vinyl esters) which simply coalesce as the solvent (usually water) evaporates, and those based on polymers which contain C=C unsaturation and which undergo oxidative crosslinking while the solvent (which can be a hydrocarbon or water) evaporates. The instant invention pertains to this second class. The polymers (often known as binders or resins) are usually of the class known as alkyd resins containing unsaturation from fatty acid chains which have been built into the molecule. When these paints are applied the solvent evaporates and oxygen in the air reacts with the C=C groups to generate radical species in the resin which can crosslink (or cure) to give a much higher molecular weight polymer which forms a very durable coating. Thus the drying of the paint is actually a physical loss of solvent and a chemical crosslinking.

The reaction with oxygen does take place naturally but it is too slow. To speed it small quantities of metal catalysts (known as driers or siccatives) are added. There are two classes - the primary driers are oxidative catalysts which actually catalyse the crosslinking, and the secondary driers which are not oxidative catalysts in their own right but work with the primary driers to give improved performance. Typically the driers are in the form of the metal carboxylates as these are soluble in the paint. The primary driers are based on cobalt, manganese, cerium and iron - with cobalt being by far the major one. The secondary driers are based on a range of other metals with zirconium and calcium being the main ones.

A non-exhaustive list of important parameters that must be satisfied for a paint are:
- Speed of drying - often described as "touch" and "through" dry.
- Hardness - even when dry some paints can be "soft" so easily damaged
- Colour - some driers can impart a colour which is unsatisfactory for a pure white paint. Cobalt imparts very little colour which contributes to its historical dominance in the field.
- Gloss
- Loss of dry (LOD) - in some paints the driers are absorbed onto the pigments (or are hydrolysed in water based paints) so become less efficient and the drying time is increased.
- Skinning - even before application (for example in the can) the paint can react with oxygen in the air (at the top of the can) or dissolved in the paint and will form a skin - this is especially true for part used cans of paint where the air space is higher. It is mainly a problem for hydrocarbon solvent based paints not water based ones.

The issue of skinning has historically been addressed by the use of methylethylketoxime (MEKO) in the paint formulation. This binds with the cobalt to form a complex and this complex does not act as a drier until the complex breaks down as the MEKO quickly evaporates along with the solvent leaving the cobalt active. Also being volatile it forms a vapour cloud above the paint in the can - so inhibiting oxygen reacting with the paint - so effectively having two modes of action.

There are however, at least two issues with the current technology. Cobalt carboxylates are reproductive toxins and are almost certain to be classified as carcinogens which will make them unsuitable for use in paint sold to the public. For this reason there is great desire to find effective alternatives to cobalt. Manganese has been the most obvious candidate but when used at levels to give good drying it has heretofore, coloured white paint. One solution has been to use an "accelerator" with the manganese to make it more effective so lower levels can be used and hence the colour is less of an issue - 2,2-bipyridyl is the most common, but this is now classified as toxic so is not really acceptable. Iron carboxylates give slow drying and colour problems - but it was found that iron (and manganese) complexes of multidentate ligands are active as paint driers and because the activity is very high, the use level is very low - so colour is not an issue.

The use of MEKO is also coming under pressure - it is a carcinogen and there are plans to reduce its exposure levels in Europe to a level which industry would find difficult to meet. There are alternatives but as these are less volatile they are much harder to use - to much deactivates the cobalt on application and slows drying, too little and it is not effective. Therefore each paint requires very precise formulation and as paint formulators have been used to just adding a lot of MEKO (since the excess evaporates easily) change must be made facile. There still exists a requirement for antiskinning agents which are both effective and easy to use, or an alternative solution to the problem of paint skinning.

It has been determined that the iron complex FeLT® (and its commercial form - a solution in propylene glycol known as Borchi® OXY Coat) works very well as a paint drier - indeed better than cobalt in water based alkyd paints - but does suffer some drawbacks in hydrocarbon solvent based systems. In particular the MEKO cannot deactivate the iron complex in the way it does the cobalt as the iron is already fully complexed and cannot interact with the MEKO. Therefore, MEKO is not an effective antiskinning agent with Borchi® OXY Coat as it is with cobalt.

In order to overcome the skinning issue, it was necessary to find ways of deactivating FeLT® in the paint can but making it active on application. The solution to this involves encapsulating the FeLT® so it is protected from the oxygen in the air and in the paint while it is being stored. When the paint is applied the capsules need to break and release the FeLT® so it can react with the oxygen and so work as a drier.

Microencapsulation is a way of protecting substances. The substance (solid or liquid) is surrounded by a thin polymer and is either released slowly with time by diffusion or as the polymer slowly decays, or in response to a specific change in chemical environment or physical change, or stays permanently surrounded and so unaffected by an environment which would normally react with it in some way.

There are many methods of microencapsulation - physical and chemical - but because of the nature of FeLT®, not all would be suitable. Interfacial polymerisation is ideal for coating the droplets in either oil-in-water or water-in-oil emulsions so is a preferred method.

The capsules need to be physically stable to stand up to the stress of being mixed in to the paint. They also need to be chemically stable in the paint and so stable to the range of polar and non-polar solvents and other additives found in typical paints. There are several common methods for capsule release. One is that the capsules are physically broken by an applied force. With paint, this would not be an effective solution as the force generated when paint is applied is actually less than when it is mixed - so the capsules would be destroyed when the paint is mixed and not on application. Another is a slow release cause by the gradual decomposition of the capsule wall - used for agrochemicals to give a controlled release over a period of time. That also is not an effective solution as the proper solution will have no release in the can on storage - but very fast release once the paint is applied. As it is not possible to predict how long the paint will be stored before application, this type of controlled release is not appropriate.

The solution involves a methodology which encapsulates the drier to give a capsule which is stable in the paint in storage for an indefinite period but on application of the paint breaks down rapidly in minutes to release the drier. Without being held to any one theory or mode of operation, it is believed that the change in osmotic pressure when the solvent evaporates and the capsule wall dries causes the capsule to break and the drier to be released.

FeLT® in water, droplets of which have been coated with a polyurethane and/or polyurea layer and the capsules are dispersed in a hydrocarbon solvent, where they remain stable. When the paint is applied the hydrocarbon solvent begins to evaporate and because of changes in the osmotic pressure within the capsules and the physical drying of the polymer coating the capsules burst releasing the FeLT® which can then act normally.

What we have shown that using the encapsulated FeLT® at an equivalent concentration to the normal non-encapsulated FeLT®, comparable drying behaviour is obtained (which is in itself comparable with cobalt) but with much reduced skinning compared.

The siccative encapsulation effort is based at least in part, upon the ability to manage the integrity of the polymer walls which encapsulate FeLT®. The polymer walls possess sufficient structural strength to withstand paint mixing, but yet are not so strong so as to resist breaking down upon application on a surface, when it is important that the polymer walls break so as to release the FeLT® to promote drying. This goal was achieved by a combination of factors, a non-limiting list of which would include controlling the ratio of the polymeric reactants. When more isocyanate is used, a thicker membrane results as well as a slower release rate; when more amine is employed, a faster reaction results, recognizing that the amine concentration should be low so as to avoid the formulation of a gel type solution. Polyurea membranes are preferred over polyurethane formulations. The choice of diisocyanate also plays a role and based on initial test results, dicyclohexylmethane diisocyanate has performed well, optionally with the addition of toluene diisocyanate (TDI). In general using isocyanates with higher reactivity is problematic in the encapsulation process. The rate of mixing also plays a role. It is important in the emulsification step where must be high sheer in order to obtain small FeLT® solution droplets. After sufficient emulsion preparation the need for high speed mixing decreases. The choice of emulsifier(s) and/or surfactants play a role and a combination of sorbitol oleates (monoleate, dioleate and/or trioleate) facilitated the stabilization of the emulsion. If the emulsion is not stable than membrane formation is not possible at the interface because of droplets coalescence, especially at higher temperatures.

The integrity of the microencapsulating polymer walls in solution must be sufficient to resist mixing and other forces when the FeLT® (in capsules) comes in contact with surfactants and binder. After the application of paint onto a surface, an evaporative process (of solvent) is started which causes diffusion of FeLT® solution out of capsules. When the FeLT® solution is released, it starts to catalyse the binder and capsules collapse because of thin membrane (and no more core). This releasing is triggered by desiccation and is termed dessicative trigger release.

## Claims

1. An oxidatively curable solvent-based coating composition, which comprises:
an oxidatively curable coating resin; and
a plurality of microcapsules of a complex of a transition metal ion selected from the group consisting of Fe(II), Fe(III), Mn(II), Mn(III), or Mn(IV) and a polydentate accelerant ligand selected from the group consisting of ligands of formulae (I) to (VI): 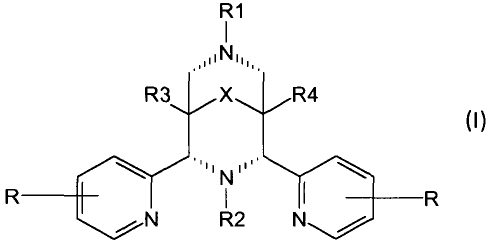 wherein:
each R is independently selected from the group consisting of hydrogen, F, Cl, Br, hydroxyl, C₁-₄-alkylO-, -NH-CO-H, -NH-CO-C₁-₄alkyl, -NH₂, -NH-C₁-₄alkyl, and C₁-₄alkyl;
R1 and R2 are independently selected from the group consisting of C₁-₂₄alkyl, C₆₋₁₀aryl, and a group containing one or two heteroatoms (e.g. N, O or S) capable of coordinating to a transition metal;
R3 and R4 are independently selected from the group consisting of hydrogen, C₁-₈alkyl, C₁-₈alkyl-O-C₁-₈alkyl, C₁-₈alkyl-O-C₆-₁₀aryl, C₆-₁₀aryl, C₁-₈hydroxyalkyl and-(CH₂)ₙC(O)OR5 wherein R5 is independently selected from hydrogen and C₁-₄alkyl,
n is from 0 to 4
X is selected from the group consisting of C=O, -[C(R6)₂]_{y}- wherein y is from 0 to 3; and
each R6 is independently selected from the group consisting of hydrogen, hydroxyl, C₁-₄ alkoxy and C₁-₄ alkyl. 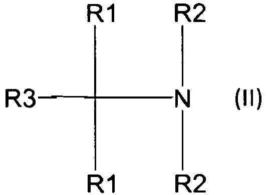
wherein:
each R1 and R2 independently represents -R4-R5;
R3 represents hydrogen, C₁₋₈-alkyl, aryl selected from homoaromatic compounds having a molecular weight under 300, or C₇₋₄₀ arylalkyl, or-R4-R5,
each R4 independently represents a single bond or a linear or branched C₁₋₈-alkyl-substituted-C₂₋₆-alkylene, C₂₋₆-alkenylene, C₂₋₆-oxyalkylene, C₂₋₆-aminoalkylene, C₂₋₆-alkenyl ether, C₂₋₆-carboxylic ester or C₂₋₆-carboxylic amide, and
each R5 independently represents an optionally N-alkyl-substituted aminoalkyl group or an optionally alkyl-substituted heteroaryl: selected from the group consisting of pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl. 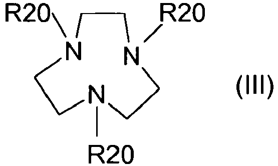
wherein
each R20 is independently selected from: C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, or C₇₋₄₀-arylalkyl group optionally substituted with a substituent selected from hydroxy, alkoxy, phenoxy, carboxylate, carboxamide, carboxylic ester, sulfonate, amine, alkylamine and N⁺(R21)₃,
R21 is selected from hydrogen, C₁₋₈-alkyl, C₂₋₆-alkenyl, C₇₋₄₀-arylalkyl, arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R22,
Y is independently selected from H, CH₃, C₂H₅, C₃H₇ and
R22 is independently selected from C₁₋₈-alkyl-substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and
wherein at least one of R20 is a -CY₂-R22. 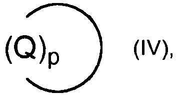
wherein:
Q is independently selected from 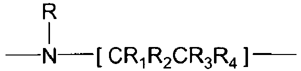 and 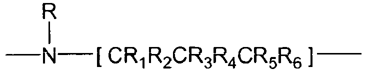
P is 4;
R is independently selected from: hydrogen, C₁₋₆-alkyl, CH₂CH₂OH pyridin-2-ylmethyl, and CH₂COOH, or one of R is linked to the N of another Q via an ethylene bridge; and
R1, R2, R3, R4, R5 and R6 are independently selected from: H, C₁₋₄-alkyl, and C₁₋₄-alkylhydroxy. 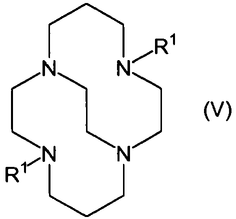
wherein
R¹ is independently selected from H, C₁₋₂₀ alkyl, C₇₋₄₀-alkylaryl, C₂₋₆-alkenyl or C₂₋₆-alkynyl.
R17R17N-X-NR17R17 (VI),
wherein:
X is selected from -CH₂CH₂-, -CH₂CH₂CH₂-, -CH₂C(OH)HCH₂-;
each R17 independently represents a group selected from: R17, C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, and C₇₋₄₀ arylalkyl groups optionally substituted with a substituent selected from hydroxy, alkoxy, phenoxy, carboxylate, carboxamide, carboxylic ester, sulfonate, amine, alkylamine and N*(R19)₃, wherein
R19 is selected from hydrogen, C₁₋₈-alkyl, C₂₋₆-alkenyl, C₇₋₄₀-arylalkyl, C₇₋₄₀-arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R18, in which each Y is independently selected from H, CH₃, C₂H₅, C₃H₇ and R18 is independently selected from an optionally substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and at least two of R17 are -CY₂-R18;
said microencapsulated complex having a polymeric outer layer comprised of a polyamide, a polysulfonamide, a polyester, a polycarbonate, a polyurethane, a polyurea polymer or mixtures thereof.

2. The coating composition of claim 1, wherein
said oxidatively curable coating resin is an alkyd-based coating composition; and said polymeric outer layer is said polyurethane or said polyurea.

3. The coating composition of claims 1 or 2, wherein
said oxidatively curable coating resin is a paint.

4. The coating composition of any of claims 1 to 3, wherein
the polydentate accelerant ligand is of formula (I).

5. The coating composition of any of claims 1 to 3, wherein
the ligand is selected from dimethyl 2,4-di-(2-pyridyl)-3-methyl-7-(pyridin-2-ylmethyl)-3,7-diaza-bicyclo[3.3.1]nonan-9-one-1,5-dicarboxylate, dimethyl 2,4-di-(2-pyridyl)-3-methyl-7-(N,N-dimethyl-amino-ethyl)-3,7-diaza-bicyclo[3.3.1]nonan-9-one-1,5-dicarboxylate, 5,12-dimethyl-1,5,8,12-tetraaza-bicyclo[6.6.2]hexadecane, 5,12-dibenzyl-1,5,8,12-tetraaza-bicyclo[6.6.2]hexadecane, 1,4,8,11-tetraazacyclotetradecane, 1,4,8,11-tetramethyl-1,4,8,11-tetraazacyclotetradecane, 1,4,7,10-tetraazacyclododecane, 1,4,7,10-tetramethyl-1,4,7,10-tetraazacyclododecane, and 1,4,7,10-tetrakis(pyridine-2ylmethyl)-1,4,7,10-tetraazacyclododecane, N,N-bis(pyridin-2-yl-methyl)-bis(pyridin-2-yl)methylamine, N,N-bis(pyridin-2-yl-methyl-1,1-bis(pyridin-2-yl)-1- aminoethane, and N,N-bis(pyridin-2-yl-methyl-1,1-bis(pyridin-2-yl)-2-phenyl-1-aminoethane.

6. The coating composition of any of claims 1 to 5, which further comprises:
at least one secondary drier; and
at least one antiskinning agent.

7. The coating composition of claim 6, wherein:
said at least one secondary drier is selected from the group consisting of complexes of zirconium, bismuth, barium, vanadium, cerium, calcium, lithium, potassium, aluminium, strontium, and zinc; and
said at least one antiskinning agent is selected from the group consisting of methylethylketoxime, acetonoxime, butyraldoxime, dialkylhydroxylamine, ascorbic acid, isoascorbate, acetylacetonate, ammonia, vitamin E (tocopherol), hydroxylamine, triethylamine, dimethylethanolamine, o-cyclohexylphenol, p-cyclohexylphenol and 2-t-butyl-4-methylphenol or mixtures thereof.

8. A method of preventing skinning of an oxidatively curable solvent-based coating
composition in a container which comprises the step of:
adding a solvent based microencapsulated aqueous siccative solution comprising a complex of a transition metal ion selected from the group consisting of Fe(II), Mn(II), Mn(III), or Mn(IV) and a polydentate accelerant ligand selected from the group consisting of ligands of formulae (I) to (VI): 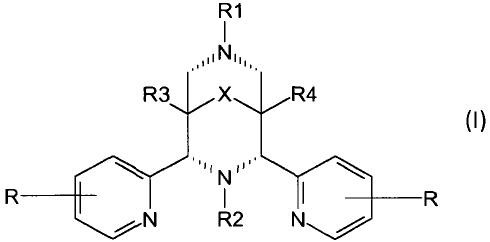 wherein:
each R is independently selected from the group consisting of hydrogen, F, Cl, Br, hydroxyl, C₁₋₄-alkylO-, -NH-CO-H, -NH-CO-C₁₋₄alkyl, -NH₂, -NH-C₁₋₄alkyl, and C₁₋₄alkyl;
R1 and R2 are independently selected from the group consisting of C₁₋₂₄alkyl, C₆₋₁₀aryl, and a group containing one or two heteroatoms (e.g. N, O or S) capable of coordinating to a transition metal;
R3 and R4 are independently selected from the group consisting of hydrogen, C₁-₈alkyl, C₁-₈alkyl-O-C₁-₈alkyl, C₁-₈alkyl-O-C₆-₁₀aryl, C₆-₁₀aryl, C₁-₈hydroxyalkyl and-(CH₂)ₙC(O)OR5 wherein R5 is independently selected from hydrogen and C₁-₄alkyl,
n is from 0 to 4
X is selected from the group consisting of C=O, -[C(R6)₂]_{y}- wherein y is from 0 to 3; and
each R6 is independently selected from the group consisting of hydrogen, hydroxyl, C₁-₄ alkoxy and C₁-₄alkyl. 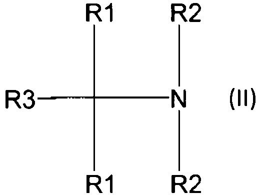
wherein:
each R1 and R2 independently represents -R4-R5;
R3 represents hydrogen, C₁₋₈-alkyl, aryl selected from homoaromatic compounds having a molecular weight under 300, or C₇₋₄₀ arylalkyl, or-R4-R5,
each R4 independently represents a single bond or a linear or branched C₁₋₈-alkyl-substituted-C₂₋₆-alkylene, C₂₋₆-alkenylene, C₂₋₆-oxyalkylene, C₂₋₆-aminoalkylene, C₂₋₆-alkenyl ether, C₂₋₆-carboxylic ester or C₂₋₆-carboxylic amide, and
each R5 independently represents an optionally N-alkyl-substituted aminoalkyl group or an optionally alkyl-substituted heteroaryl: selected from the group consisting of pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl. 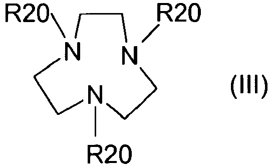
wherein
each R20 is independently selected from: C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, or C₇₋₄₀-arylalkyl group optionally substituted with a substituent selected from hydroxy, alkoxy, phenoxy, carboxylate, carboxamide, carboxylic ester, sulfonate, amine, alkylamine and N⁺(R21)₃,
R21 is selected from hydrogen, C₁₋₈-alkyl, C₂₋₆-alkenyl, C₇₋₄₀-arylalkyl, arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R22,
Y is independently selected from H, CH₃, C₂H₅, C₃H₇ and
R22 is independently selected from C₁₋₈-alkyl-substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and
wherein at least one of R20 is a -CY₂-R22. 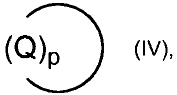
wherein:
Q is independently selected from 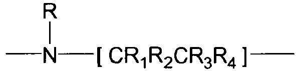 and 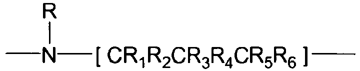
P is 4;
R is independently selected from: hydrogen, C₁₋₆-alkyl, CH₂CH₂OH pyridin-2-ylmethyl, and CH₂COOH, or one of R is linked to the N of another Q via an ethylene bridge; and
R1, R2, R3, R4, R5 and R6 are independently selected from: H, C₁-₄-alkyl, and C₁-₄-alkylhydroxy. 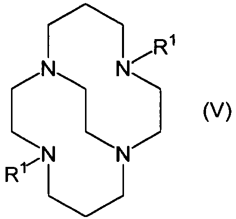
wherein
R¹ is independently selected from H, C₁₋₂₀ alkyl, C₇₋₄₀-alkylaryl, C₂₋₆-alkenyl or C₂₋₆-alkynyl.
R17R17N-X-NR17R17 (VI),
wherein:
X is selected from -CH₂CH₂-, -CH₂CH₂CH₂-, -CH₂C(OH)HCH₂-;
each R17 independently represents a group selected from: R17, C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, and C₇₋₄₀ arylalkyl groups optionally substituted with a substituent selected from hydroxy, alkoxy, phenoxy, carboxylate, carboxamide, carboxylic ester, sulfonate, amine, alkylamine and N⁺(R19)₃, wherein
R19 is selected from hydrogen, C₁₋₈-alkyl, C₂₋₆-alkenyl, C₇₋₄₀-arylalkyl, C₇₋₄₀-arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R18, in which each Y is independently selected from H, CH₃, C₂H₅, C₃H₇ and R18 is independently selected from an optionally substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and at least two of R17 are -CY₂-R18;
to said oxidatively curable solvent-based coating; and
mixing said oxidatively curable solvent-based coating composition and said microencapsulated aqueous solution comprising said complex of said transition metal ion and said polydentate accelerant ligand using shear force mixing.

9. The method of claim 8, wherein
the solvent based microencapsulated aqueous siccative solution comprises 0.001 to 8% by weight of the complex, based on the weight of water in the aqueous solution.

10. The method of claims 8 or 9 wherein
said solvent-based coating is an alkyd-based coating.

11. The method of any of claims 8 to 10, wherein
the polydentate accelerant ligand is of formula (I); and
the solvent-based coating is a paint.

12. The method of any of claims 8 to 11, which further comprises the step of:
adding at least one secondary drier; and/or which further comprises the step of:
adding at least one antiskinning agent.

13. A method of forming an encapsulated siccative for use in a solvent-based coating comprising the steps of:
adding at least one siccative comprising at least one polydentate accelerant ligand selected from the group consisting of ligands of formulae (I) to (VI): 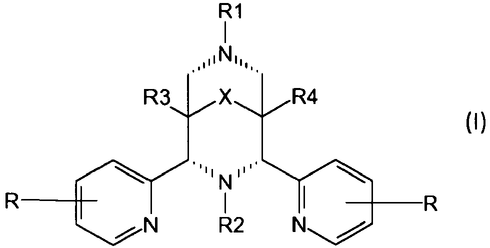 wherein:
each R is independently selected from the group consisting of hydrogen, F, Cl, Br, hydroxyl, C₁-₄-alkylO-, -NH-CO-H, -NH-CO-C₁-₄alkyl, -NH₂, -NH-C₁-₄alkyl, and C₁-₄alkyl;
R1 and R2 are independently selected from the group consisting of C₁-₂₄alkyl, C₆₋₁₀aryl, and a group containing one or two heteroatoms (e.g. N, O or S) capable of coordinating to a transition metal;
R3 and R4 are independently selected from the group consisting of hydrogen, C₁-₈alkyl, C₁-₈alkyl-O-C₁-₈alkyl, C₁-₈alkyl-O-C₆-₁₀aryl, C₆-₁₀aryl, C₁-₈hydroxyalkyl and-(CH₂)ₙC(O)OR5 wherein R5 is independently selected from hydrogen and C₁-alkyl,
n is from 0 to 4
X is selected from the group consisting of C=O, -[C(R6)₂]_{y}- wherein y is from 0 to 3; and
each R6 is independently selected from the group consisting of hydrogen, hydroxyl, C₁-₄ alkoxy and C₁-₄ alkyl. 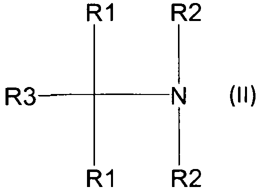
wherein:
each R1 and R2 independently represents -R4-R5;
R3 represents hydrogen, C₁₋₈-alkyl, aryl selected from homoaromatic compounds having a molecular weight under 300, or C₇₋₄₀ arylalkyl, or-R4-R5,
each R4 independently represents a single bond or a linear or branched C₁₋₈-alkyl-substituted-C₂₋₆-alkylene, C₂₋₆-alkenylene, C₂₋₆-oxyalkylene, C₂₋₆-aminoalkylene, C₂₋₆-alkenyl ether, C₂₋₆-carboxylic ester or C₂₋₆-carboxylic amide, and
each R5 independently represents an optionally N-alkyl-substituted aminoalkyl group or an optionally alkyl-substituted heteroaryl: selected from the group consisting of pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl. 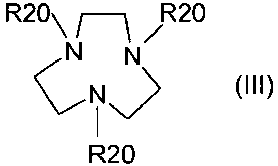
wherein
each R20 is independently selected from: C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, or C₇₋₄₀-arylalkyl group optionally substituted with a substituent selected from hydroxy, alkoxy, phenoxy, carboxylate, carboxamide, carboxylic ester, sulfonate, amine, alkylamine and N⁺(R21)₃,
R21 is selected from hydrogen, C₁₋₈-alkyl, C₂₋₆-alkenyl, C₇₋₄₀-arylalkyl, arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R22,
Y is independently selected from H, CH₃, C₂H₅, C₃H₇ and
R22 is independently selected from C₁₋₈-alkyl-substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and
wherein at least one of R20 is a -CY₂-R22. 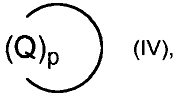
wherein:
Q is independently selected from 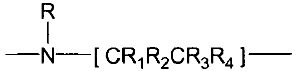 and 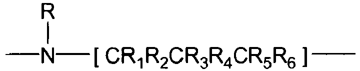
P is 4;
R is independently selected from: hydrogen, C₁₋₆-alkyl, CH₂CH₂OH, pyridin-2-ylmethyl, and CH₂COOH, or one of R is linked to the N of another Q via an ethylene bridge; and
R1, R2, R3, R4, R5 and R6 are independently selected from: H, C₁₋₄-alkyl, and C₁₋₄-alkylhydroxy. 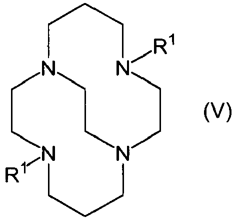
wherein
R¹ is independently selected from H, C₁₋₂₀ alkyl, C₇₋₄₀-alkylaryl, C₂₋₆-alkenyl or C₂₋₆-alkynyl.
R17R17N-X-NR17R17 (VI),
wherein:
X is selected from -CH₂CH₂-, -CH₂CH₂CH₂-, -CH₂C(OH)HCH₂-;
each R17 independently represents a group selected from: R17, C₁₋₈-alkyl, C₃₋₈-cycloalkyl, heterocycloalkyl selected from the group consisting of: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7-triazacyclononanyl; 1,4,8,11-tetraazacyclotetradecanyl; 1,4,7,10,13-pentaazacyclopentadecanyl; 1,4-diaza-7-thia-cyclononanyl; 1,4-diaza-7-oxa-cyclononanyl; 1,4,7,10-tetraazacyclododecanyl; 1,4-dioxanyl; 1,4,7-trithia-cyclononanyl; tetrahydropyranyl; and oxazolidinyl, wherein the heterocycloalkyl may be connected to the compound via any atom in the ring of the selected heterocycloalkyl; heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl, aryl selected from homoaromatic compounds having a molecular weight under 300, and C₇₋₄₀ arylalkyl groups optionally substituted with a substituent selected from hydroxy, alkoxy, phenoxy, carboxylate, carboxamide, carboxylic ester, sulfonate, amine, alkylamine and N⁺(R19)₃, wherein
R19 is selected from hydrogen, C₁₋₈-alkyl, C₂₋₆-alkenyl, C₇₋₄₀-arylalkyl, C₇₋₄₀-arylalkenyl, C₁₋₈-oxyalkyl, C₂₋₆-oxyalkenyl, C₁₋₈-aminoalkyl, C₂₋₆-aminoalkenyl, C₁₋₈-alkyl ether, C₂₋₆-alkenyl ether, and -CY₂-R18, in which each Y is independently selected from H, CH₃, C₂H₅, C₃H₇ and R18 is independently selected from an optionally substituted heteroaryl: selected from the group consisting of: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; carbazolyl; indolyl; and isoindolyl, wherein the heteroaryl may be connected to the compound via any atom in the ring of the selected heteroaryl; and at least two of R17 are -CY₂-R18;
and at least one transition metal ion selected from the group consisting of Fe(II), Fe(III), MN(II), Mn(III), or Mn(IV); into an aqueous solvent;
adding a at least one amine or at least one polyol into an aqueous solution of the siccative;
adding at least one surfactant into a non-aqueous solvent;
combining said non-aqueous solvent solution and said an aqueous solution comprising at least one siccative and at least one amine or polyol under emulsifying shear conditions to form a water-in-oil emulsion;
adding said at least one isocyanate to said emulsion;
polymerising said at least one amine or polyol with said at least one isocyanate in said emulsion to form a slurry of polyurethane or polyurea microcapsules in said non-aqueous solvent; and
adding said microencapsulated siccative to an oxidatively curable solvent-based coating.

14. The method of claim 13 which further comprises the step of:
heating said emulsion during said step of polymerizing.

15. The method of any of claims 13 to 14 wherein
said solvent-based coating is an alkyd-based coating.

16. The method of any of claims 13 to 15, wherein
the polydentate accelerant ligand is of formula (I); and
the solvent-based coating is a paint.

## Patentansprüche

1. Oxidativ härtbare lösemittelbasierte Beschichtungszusammensetzung, welche umfasst:
ein oxidativ härtbares Beschichtungsharz; und
eine Vielzahl von Mikrokapseln von einem Komplex aus einem Übergangsmetallion, welches aus der Gruppe ausgewählt ist, die aus Fe(II), Fe(III), Mn(II), Mn(III) oder Mn(IV) besteht, und einem (mehrzahnigen) polydentaten Liganden als Beschleuniger, wobei der Ligand aus der Gruppe ausgewählt ist, die aus den Liganden der Formeln (I) bis (VI) besteht: 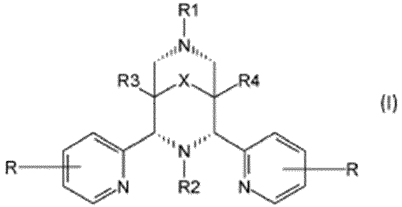 wobei:
jedes R unabhängig ausgewählt ist aus der Gruppe, die aus einem Wasserstoffatom, einem F, einem Cl, einem Br, einem Hydroxyl, einem (C₁₋₄)- Alkyl-0-, einem -NH-CO-H, einem -NH-CO-(C₁₋₄)-Alkyl, einem -NH₂, einem -NH-(C₁₋₄)- Alkyl, und einem (C₁-4)- Alkyl besteht;
R1 und R2 unabhängig ausgewählt sind aus der Gruppe, die aus einem (C₁₋₂₄)- Alkyl, einem (C₆₋₁₀)- Aryl, und einer Gruppe, die ein oder zwei Heteroatome (z.B. N, O oder S) enthält, welche in der Lage sind, an ein Übergangsmetall zu koordinieren, besteht;
R3 und R4 unabhängig voneinander ausgewählt sind aus der Gruppe, die aus einem Wasserstoffatom, einem (C₁₋₈)-Alkyl, einem (C₁₋₈)- Alkyl-O-(C₁₋₈)- Alkyl, einem (C₁₋₈)- Alkyl-O-(C₆₋₁₀)- Aryl, einem (C₆₋₁₀)- Aryl, einem (C₁₋₈)- Hydroxyalkyl und einem -(CH₂)ₙC(O)OR5 besteht, wobei R5 unabhängig ausgewählt ist aus einem Wasserstoffatom und einem (C₁₋₄)- Alkyl,
n eine Zahl von 0 bis 4 ist;
X ausgewählt ist aus der Gruppe, die aus C=O, und -[C(R6)₂]_{y}- besteht, wobei y eine Zahl von 0 bis 3 ist; und
jedes R6 unabhängig ausgewählt ist aus der Gruppe, die aus einem Wasserstoffatom, einem Hydroxyl, einem (C₁₋₄)-Alkoxy und einem (C₁₋₄)- Alkyl besteht; 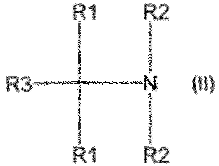
wobei:
jedes R¹ und R² unabhängig voneinander -R4-R5 darstellt;
R3 ein Wasserstoffatom, ein (C₁₋₈)- Alkyl, ein Aryl, welches aus homoaromatischen Verbindungen, die ein Molekulargewicht unter 300 aufweisen, ausgewählt ist, oder ein (C₇₋₄₀)- Arylalkyl, oder -R4-R5 darstellt;
jedes R4 unabhängig eine Einfachbindung oder ein lineares oder verzweigtes (C₁₋₈)- Alkyl- substituiertes (C₂₋₆)- Alkylen, ein (C₂₋₆)- Alkenylen, ein (C₂₋₆)-Oxyalkylen, ein (C₂₋₆)- Aminoalkylen, einen (C₂₋₆)-Alkenylether, einen (C₂₋₆)- Carbonsäureester oder ein (C₂₋₆)- Carbonsäureamid darstellt;
jedes R5 unabhängig eine gegebenenfalls N-Alkyl-substituierte Aminoalkylgruppe darstellt oder ein gegebenenfalls Alkyl- substituiertes Heteroaryl: ausgewählt aus der Gruppe, die aus einem Pyridinyl; einem Pyrimidinyl; einem Pyrazinyl; einem Triazolyl; einem Pyridazinyl; einem 1,3,5-Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann, darstellt; 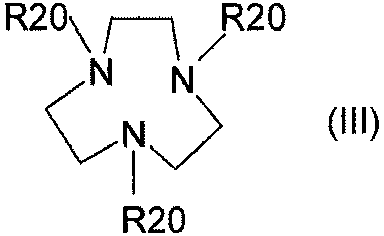
wobei:
jedes R20 unabhängig ausgewählt ist aus: einem (C₁₋₈)- Alkyl, einem (C₃₋₈)- Cycloalkyl, einem Heterocycloalkyl, welches aus der Gruppe ausgewählt ist, die aus: einem Pyrrolinyl; einem Pyrrolidinyl; einem Morpholinyl; einem Piperidinyl; einem Piperazinyl; einem Hexamethylenimin; einem 1,4-Piperazinyl; einem Tetrahydrothiophenyl; einem Tetrahydrofuranyl; einem 1,4,7- Triazacyclononanyl; einem 1,4,8,11- Tetraazacyclotetradecanyl; einem 1,4,7,10,13- Pentaazacyclopentadecanyl; einem 1,4-Diaza- 7-thia- cyclononanyl; einem 1,4- Diaza- 7-oxa- cyclononanyl; einem 1,4,7,10-Tetraazacyclododecanyl; einem 1,4- Dioxanyl; einem 1,4,7- Trithia- cyclononanyl; einem Tetrahydropyranyl; und einem Oxazolidinyl besteht, wobei das Heterocycloalkyl mit der Verbindung über ein beliebiges Atom im Ring des ausgewählten Heterocycloalkyls verbunden sein kann; einem Heteroaryl, welches aus der Gruppe ausgewählt ist, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann; einem Aryl, welches ausgewählt ist aus homoaromatischen Verbindungen, die ein Molekulargewicht unter 300 aufweisen; oder einer (C₇₋₄₀)- Arylalkylgruppe, die gegebenenfalls mit einem Substituenten, der aus einem Hydroxy , einem Alkoxy, einem Phenoxy, einem Carboxylat, einem Carboxamid, einem Carbonsäureester, einem Sulfonat, einem Amin, einem Alkylamin und N⁺(R21)₃ ausgewählt ist, substituiert sein kann;
R21 ausgewählt ist aus einem Wasserstoffatom, einem (C₁₋₈)- Alkyl, einem (C₂₋₆)- Alkenyl, einem (C₇₋₄₀)-Arylalkyl, einem Arylalkenyl, einem (C₁₋₈)-Oxyalkyl, einem (C₂₋₆)- Oxyalkenyl, einem (C₁₋₈)-Aminoalkyl, einem (C₂₋₆)- Aminoalkenyl, einem (C₁₋₈)-Alkylether, einem (C₂₋₆)- Alkenylether und -CY₂-R22;
Y unabhängig ausgewählt ist aus H, CH₃, C₂H₅, C₃H₇; und
R22 unabhängig ausgewählt ist aus einem (C₁₋₈)- Alkyl-substituierten Heteroaryl: ausgewählt aus der Gruppe, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl über ein beliebiges Atom im Ring des ausgewählten Heteroaryls mit der Verbindung verbunden sein kann; und
wobei mindestens ein R20 ein -CY₂-R22 ist; 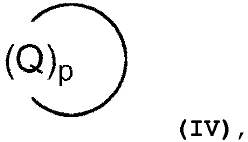
wobei:
Q unabhängig ausgewählt ist aus: 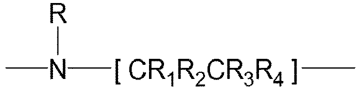 und 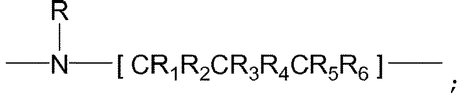
P 4 ist;
R unabhängig ausgewählt ist aus: einem Wasserstoffatom, einem (C₁₋₆)- Alkyl, CH₂CH₂OH, Pyridin- 2-ylmethyl und CH₂COOH, oder einer der Reste R ist mit dem N eines anderen Q über eine Ethylenbrücke verbunden; und
R1, R2, R3, R4, R5 und R6 unabhängig ausgewählt sind aus: H, einem (C₁₋₄)- Alkyl und einem (C₁₋₄)- Alkylhydroxy; 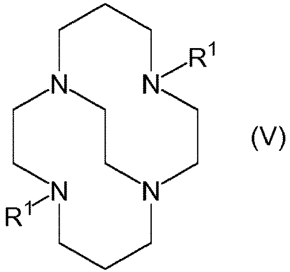
wobei:
R¹ unabhängig ausgewählt ist aus: H, einem (C₁₋₂₀)- Alkyl, einem (C₇₋₄₀)- Alkylaryl, einem (C₂₋₆)- Alkenyl oder einem (C₂₋₆)-Alkinyl;
**R17R17N-X-NR17R17** **(VI)**
wobei:
X ausgewählt ist aus: -CH₂CH₂-, -CH₂CH₂CH₂-, und -CH₂C(OH)HCH₂-;
jedes R17 unabhängig eine Gruppe darstellt, die ausgewählt ist aus : R17, einem (C₁₋₈)- Alkyl, einem (C₃₋₈)-Cycloalkyl, einem Heterocycloalkyl, welches aus der Gruppe ausgewählt ist, die aus: einem Pyrrolinyl; einem Pyrrolidinyl; einem Morpholinyl; einem Piperidinyl; einem Piperazinyl; einem Hexamethylenimin; einem 1,4-Piperazinyl; einem Tetrahydrothiophenyl; einem Tetrahydrofuranyl; einem 1,4,7- Triazacyclononanyl; einem 1,4,8,11-Tetraazacyclotetradecanyl; einem 1,4,7,10,13-Pentaazacyclopentadecanyl; einem 1,4- Diaza- 7-thia- cyclononanyl; einem 1,4- Diaza- 7-oxa-cyclononanyl; einem 1,4,7,10- Tetraazacyclo-dodecanyl; einem 1,4- Dioxanyl; einem 1,4,7-Trithia- cyclononanyl; einem Tetrahydropyranyl; und einem Oxazolidinyl besteht, wobei das Heterocycloalkyl mit der Verbindung über ein beliebiges Atom im Ring des ausgewählten Heterocycloalkyls verbunden sein kann; einem Heteroaryl, welches aus der Gruppe ausgewählt ist, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann; einem Aryl, welches ausgewählt ist aus homoaromatischen Verbindungen, die ein Molekulargewicht unter 300 aufweisen; und (C₇₋₄₀)-Arylalkylgruppen, die gegebenenfalls mit einem Substituenten, der aus einem Hydroxy , einem Alkoxy, einem Phenoxy, einem Carboxylat, einem Carboxamid, einem Carbonsäureester, einem Sulfonat, einem Amin, einem Alkylamin und N⁺(R19)₃ ausgewählt ist, substituiert sein kann; wobei
R19 ausgewählt ist aus einem Wasserstoffatom, einem (C₁₋₈)- Alkyl, einem (C₂₋₆)- Alkenyl, einem (C₇₋₄₀)-Arylalkyl, einem (C₇₋₄₀)- Arylalkenyl, einem (C₁₋₈)-Oxyalkyl, einem (C₂₋₆)- Oxyalkenyl, einem (C₁₋₈)-Aminoalkyl, einem (C₂₋₆)- Aminoalkenyl, einem (C₁₋₈)-Alkylether, einem (C₂₋₆)- Alkenylether und -CY₂-R18; wobei jedes Y unabhängig voneinander aus H, CH₃, C₂H₅, C₃H₇ ausgewählt ist; und R18 unabhängig ausgewählt ist aus einem gegebenenfalls substituierten Heteroaryl: ausgewählt aus der Gruppe, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl über ein beliebiges Atom im Ring des ausgewählten Heteroaryls mit der Verbindung verbunden sein kann; und mindestens zwei von den Resten R17 ein -CY₂-R18 sind;
wobei der mikroverkapselte Komplex eine polymere äußere Schicht aufweist, welche ein Polyamid-, ein Polysulfonamid-, ein Polyester-, ein Polycarbonat-, ein Polyurethan-, ein Polyharnstoff- Polymer oder Mischungen derselben umfasst.

2. Die Beschichtungszusammensetzung nach Anspruch 1, wobei
das oxidativ härtbare Beschichtungsharz eine Beschichtungszusammensetzung auf Alkydbasis ist; und
die polymere äußere Schicht das Polyurethan oder der Polyharnstoff ist.

3. Die Beschichtungszusammensetzung nach Anspruch 1 oder 2, wobei
das oxidativ härtbare Beschichtungsharz ein Anstrichmittel ist.

4. Die Beschichtungszusammensetzung nach einem der Ansprüche 1 bis 3, wobei
der polydentate Ligand als Beschleuniger die Formel (I) besitzt.

5. Die Beschichtungszusammensetzung nach einem der Ansprüche 1 bis 3, wobei
der Ligand ausgewählt ist aus: Dimethyl- 2,4-di-(2-pyridyl)- 3-methyl- 7-(pyridin-2-ylmethyl)- 3,7-diaza-bicyclo[3.3.1]nonan- 9-on- 1,5-dicarboxylat, Dimethyl-2,4-di-(2-pyridyl)- 3-methyl- 7-(N,N-dimethyl-aminoethyl)- 3,7-diaza- bicyclo[3.3.1]nonan- 9-on- 1,5-dicarboxylat, 5,12-Dimethyl- 1,5,8,12-tetraaza-bicyclo[6.6.2]hexadecan, 5,12-Dibenzyl- 1,5,8,12-tetraaza-bicyclo[6.6.2]hexadecan, 1,4,8,11-Tetraazacyclotetradecan, 1,4,8,11-Tetramethyl- 1,4,8,11-tetraazacyclotetradecan, 1,4,7,10-Tetraaza- cyclododecan, 1,4,7,10-Tetramethyl- 1,4,7,10-tetraaza- cyclododecan, und 1,4,7,10-Tetrakis (pyridin- 2-yl- methyl)- 1,4,7,10-tetraaza- cyclododecan, N,N-Bis(pyridin- 2-yl- methyl)-bis(pyridin- 2-yl)- methylamin, N,N-Bis(pyridin- 2-ylmethyl- 1,1-bis(pyridin- 2-yl)- 1-aminoethan, und N,N-Bis(pyridin- 2-yl- methyl- 1,1-bis(pyridin- 2-yl)- 2-phenyl- 1-aminoethan.

6. Die Beschichtungszusammensetzung nach einem der Ansprüche 1 bis 5, welche ferner umfasst:
mindestens ein sekundäres Trocknungsmittel; und
mindestens ein Hautverhinderungsmittel.

7. Die Beschichtungszusammensetzung nach Anspruch 6, wobei:
das mindestens eine sekundäre Trocknungsmittel aus der Gruppe ausgewählt ist, die aus Komplexen von Zirkonium, Wismut, Barium, Vanadium, Cer, Calcium, Lithium, Kalium, Aluminium, Strontium und Zink besteht; und
das mindestens eine Hautverhinderungsmittel aus der Gruppe ausgewählt ist, die aus Methylethylketoxim, Acetonoxim, Butyraldoxim, Dialkylhydroxylamin, Ascorbinsäure, Isoascorbat, Acetylacetonat, Ammoniak, Vitamin E (Tocopherol), Hydroxylamin, Triethylamin, Dimethylethanolamin, o-Cyclohexylphenol, p-Cyclohexylphenol und 2-t-Butyl- 4-methylphenol oder Mischungen derselben besteht.

8. Verfahren zur Verhinderung der Hautbildung einer oxidativ härtbaren lösemittelbasierten Beschichtungszusammensetzung in einem Behälter, welches den Schritt umfasst:
das Zugeben einer lösemittelbasierten, mikroverkapselten, wässrigen Lösung eines Trocknungsmittels (Sikkativ), die umfasst: einen Komplex aus einem Übergangsmetallion, welches aus der Gruppe ausgewählt ist, die aus Fe(II), Fe(III), Mn(II), Mn(III) oder Mn(IV) besteht, und einem (mehrzahnigen) polydentaten Liganden als Beschleuniger, wobei der Ligand aus der Gruppe ausgewählt ist, die aus den Liganden der Formeln (I) bis (VI) besteht: 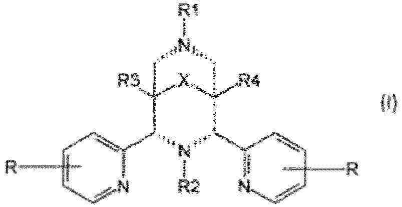 wobei:
jedes R unabhängig ausgewählt ist aus der Gruppe, die aus einem Wasserstoffatom, einem F, einem Cl, einem Br, einem Hydroxyl, einem (C₁₋₄)- Alkyl-0-, einem -NH-CO-H, einem -NH-CO-(C₁₋₄)-Alkyl, einem -NH₂, einem -NH-(C₁₋₄)- Alkyl, und einem (C₁₋₄)- Alkyl besteht;
R¹ und R2 unabhängig ausgewählt sind aus der Gruppe, die aus einem (C₁₋₂₄) - Alkyl, einem (C₆₋₁₀)- Aryl, und einer Gruppe, die ein oder zwei Heteroatome (z.B. N, O oder S) enthält, welche in der Lage sind, an ein Übergangsmetall zu koordinieren, besteht;
R3 und R4 unabhängig voneinander ausgewählt sind aus der Gruppe, die aus einem Wasserstoffatom, einem (C₁₋₈)-Alkyl, einem (C₁₋₈)- Alkyl-O-(C₁₋₈)- Alkyl, einem (C₁₋₈)- Alkyl-O-(C₆₋₁₀)- Aryl, einem (C₆₋₁₀)- Aryl, einem (C₁₋₈)- Hydroxyalkyl und einem -(CH₂)ₙC(O)OR5 besteht, wobei R5 unabhängig ausgewählt ist aus einem Wasserstoffatom und einem (C₁₋₄)- Alkyl,
n eine Zahl von 0 bis 4 ist;
X ausgewählt ist aus der Gruppe, die aus C=O, und -[C(R6)₂]_{y}- besteht, wobei y eine Zahl von 0 bis 3 ist; und
jedes R6 unabhängig ausgewählt ist aus der Gruppe, die aus einem Wasserstoffatom, einem Hydroxyl, einem (C₁₋₄)-Alkoxy und einem (C₁₋₄)- Alkyl besteht; 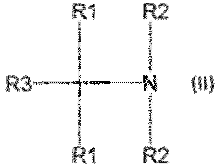
wobei:
jedes R¹ und R² unabhängig voneinander -R4-R5 darstellt;
R3 ein Wasserstoffatom, ein (C₁₋₈)- Alkyl, ein Aryl, welches aus homoaromatischen Verbindungen, die ein Molekulargewicht unter 300 aufweisen, ausgewählt ist, oder ein (C₇₋₄₀)- Arylalkyl, oder -R4-R5 darstellt;
jedes R4 unabhängig eine Einfachbindung oder ein lineares oder verzweigtes (C₁₋₈)- Alkyl-substituiertes (C₂₋₆)- Alkylen, ein (C₂₋₆)-Alkenylen, ein (C₂₋₆)- Oxyalkylen, ein (C₂₋₆)-Aminoalkylen, einen (C₂₋₆)- Alkenylether, einen (C₂₋₆) - Carbonsäureester oder ein (C₂₋₆)- Carbonsäureamid darstellt;
jedes R5 unabhängig eine gegebenenfalls N-Alkyl-substituierte Aminoalkylgruppe darstellt oder ein gegebenenfalls Alkyl-substituiertes Heteroaryl: ausgewählt aus der Gruppe, die aus einem Pyridinyl; einem Pyrimidinyl; einem Pyrazinyl; einem Triazolyl; einem Pyridazinyl; einem 1,3,5-Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann, darstellt; 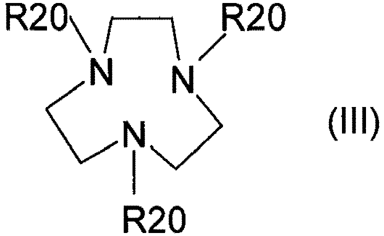
wobei:
jedes R20 unabhängig ausgewählt ist aus: einem (C₁₋₈)- Alkyl, einem (C₃₋₈)- Cycloalkyl, einem Heterocycloalkyl, welches aus der Gruppe ausgewählt ist, die aus: einem Pyrrolinyl; einem Pyrrolidinyl; einem Morpholinyl; einem Piperidinyl; einem Piperazinyl; einem Hexamethylenimin; einem 1,4-Piperazinyl; einem Tetrahydrothiophenyl; einem Tetrahydrofuranyl; einem 1,4,7- Triazacyclononanyl; einem 1,4,8,11- Tetraazacyclotetradecanyl; einem 1,4,7,10,13-Pentaaza- cyclopentadecanyl; einem 1,4-Diaza- 7-thia- cyclononanyl; einem 1,4- Diaza- 7-oxa- cyclononanyl; einem 1,4,7,10-Tetraaza-cyclododecanyl; einem 1,4- Dioxanyl; einem 1,4,7-Trithia- cyclononanyl; einem Tetrahydro-pyranyl; und einem Oxazolidinyl besteht, wobei das Heterocycloalkyl mit der Verbindung über ein beliebiges Atom im Ring des ausgewählten Heterocycloalkyls verbunden sein kann; einem Heteroaryl, welches aus der Gruppe ausgewählt ist, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann; einem Aryl, welches ausgewählt ist aus homoaromatischen Verbindungen, die ein Molekulargewicht unter 300 aufweisen; oder einer (C₇₋₄₀)- Arylalkylgruppe, die gegebenenfalls mit einem Substituenten, der aus einem Hydroxy , einem Alkoxy, einem Phenoxy, einem Carboxylat, einem Carboxamid, einem Carbonsäure-ester, einem Sulfonat, einem Amin, einem Alkylamin und N⁺(R21)₃ ausgewählt ist, substituiert sein kann;
R21 ausgewählt ist aus einem Wasserstoffatom, einem (C₁₋₈)- Alkyl, einem (C₂₋₆)- Alkenyl, einem (C₇₋₄₀)-Arylalkyl, einem Arylalkenyl, einem (C₁₋₈)-Oxyalkyl, einem (C₂₋₆)- Oxyalkenyl, einem (C₁₋₈)-Aminoalkyl, einem (C₂₋₆)- Aminoalkenyl, einem (C₁₋₈)-Alkylether, einem (C₂₋₆)- Alkenylether und -CY₂-R22;
Y unabhängig ausgewählt ist aus H, CH₃, C₂H₅, C₃H₇; und
R22 unabhängig ausgewählt ist aus einem (C₁₋₈)- Alkyl-substituierten Heteroaryl: ausgewählt aus der Gruppe, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl über ein beliebiges Atom im Ring des ausgewählten Heteroaryls mit der Verbindung verbunden sein kann; und
wobei mindestens ein R20 ein -CY₂-R22 ist; 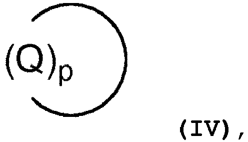
wobei:
Q unabhängig ausgewählt ist aus: 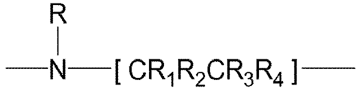 und 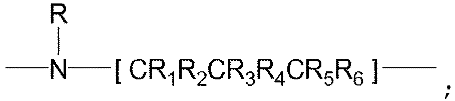
P 4 ist;
R unabhängig ausgewählt ist aus: einem Wasserstoffatom, einem (C₁₋₆)- Alkyl, CH₂CH₂OH, Pyridin- 2-ylmethyl und CH₂COOH, oder einer der Reste R ist mit dem N eines anderen Q über eine Ethylenbrücke verbunden; und
R1, R2, R3, R4, R5 und R6 unabhängig ausgewählt sind aus: H, einem (C₁₋₄)- Alkyl und einem (C₁₋₄)- Alkylhydroxy; 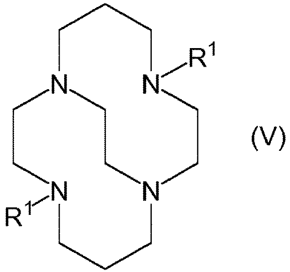
wobei:
R¹ unabhängig ausgewählt ist aus: H, einem (C₁₋₂₀)- Alkyl, einem (C₇₋₄₀)- Alkylaryl, einem (C₂₋₆)- Alkenyl oder einem (C₂₋₆)-Alkinyl;
**R17R17N-X-NR17R17** **(VI)**
wobei:
X ausgewählt ist aus: -CH₂CH₂-, -CH₂CH₂CH₂-, und -CH₂C(OH)HCH₂-;
jedes R17 unabhängig eine Gruppe darstellt, die ausgewählt ist aus : R17, einem (C₁₋₈)- Alkyl, einem (C₃₋₈)-Cycloalkyl, einem Heterocycloalkyl, welches aus der Gruppe ausgewählt ist, die aus: einem Pyrrolinyl; einem Pyrrolidinyl; einem Morpholinyl; einem Piperidinyl; einem Piperazinyl; einem Hexamethylenimin; einem 1,4-Piperazinyl; einem Tetrahydrothiophenyl; einem Tetrahydrofuranyl; einem 1,4,7- Triazacyclononanyl; einem 1,4,8,11-Tetraazacyclotetradecanyl; einem 1,4,7,10,13-Pentaazacyclopentadecanyl; einem 1,4- Diaza- 7-thia- cyclononanyl; einem 1,4- Diaza- 7-oxa-cyclononanyl; einem 1,4,7,10- Tetraazacyclo-dodecanyl; einem 1,4- Dioxanyl; einem 1,4,7-Trithia- cyclononanyl; einem Tetrahydropyranyl; und einem Oxazolidinyl besteht, wobei das Heterocycloalkyl mit der Verbindung über ein beliebiges Atom im Ring des ausgewählten Heterocycloalkyls verbunden sein kann; einem Heteroaryl, welches aus der Gruppe ausgewählt ist, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann; einem Aryl, welches ausgewählt ist aus homoaromatischen Verbindungen, die ein Molekulargewicht unter 300 aufweisen; und (C₇₋₄₀)-Arylalkylgruppen, die gegebenenfalls mit einem Substituenten, der aus einem Hydroxy , einem Alkoxy, einem Phenoxy, einem Carboxylat, einem Carboxamid, einem Carbonsäureester, einem Sulfonat, einem Amin, einem Alkylamin und N⁺(R19)₃ ausgewählt ist, substituiert sein kann; wobei
R19 ausgewählt ist aus einem Wasserstoffatom, einem (C₁₋₈)- Alkyl, einem (C₂₋₆)- Alkenyl, einem (C₇₋₄₀)-Arylalkyl, einem (C₇₋₄₀)- Arylalkenyl, einem (C₁₋₈)-Oxyalkyl, einem (C₂₋₆)- Oxyalkenyl, einem (C₁₋₈)-Aminoalkyl, einem (C₂₋₆)- Aminoalkenyl, einem (C₁-8)- Alkylether, einem (C₂₋₆)- Alkenylether und-CY₂-R18; wobei jedes Y unabhängig voneinander aus H, CH₃, C₂H₅, C₃H₇ ausgewählt ist; und R18 unabhängig ausgewählt ist aus einem gegebenenfalls substituierten Heteroaryl: ausgewählt aus der Gruppe, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl über ein beliebiges Atom im Ring des ausgewählten Heteroaryls mit der Verbindung verbunden sein kann; und mindestens zwei von den Resten R17 ein -CY₂-R18 sind;
zu der oxidativ härtbaren lösemittelbasierten Beschichtung; und
das Mischen der oxidativ härtbaren lösemittelbasierten Beschichtungszusammensetzung und der mikroverkapselten wässrigen Lösung, die den Komplex aus dem Übergangsmetallion und dem polydentaten Liganden als Beschleuniger umfasst, unter Verwendung von Mischen durch Scherkraft.

9. Das Verfahren nach Anspruch 8, wobei
die lösemittelbasierte, mikroverkapselte, wässrige Lösung des Trocknungsmittels 0,001 bis 8 Gew.-% des Komplexes, bezogen auf das Gewicht des Wassers in der wässrigen Lösung, enthält.

10. Das Verfahren nach Anspruch 8 oder 9, wobei
die lösemittelbasierte Beschichtung eine Beschichtung auf Alkydbasis ist.

11. Das Verfahren nach einem der Ansprüche 8 bis 10, wobei
der polydentate Ligand als Beschleuniger die Formel (I) besitzt; und
die lösemittelbasierte Beschichtung ein Anstrichmittel ist.

12. Das Verfahren nach einem der Ansprüche 8 bis 11, welches ferner den Schritt umfasst:
das Zugeben von mindestens einem sekundären Trocknungsmittel; und / oder welches ferner den Schritt umfasst:
das Zugeben von mindestens einem Hautverhinderungsmittel.

13. Verfahren zur Bildung eines verkapselten Sikkativs zur Verwendung in einer lösemittelbasierten Beschichtung, welches die Schritte umfasst:
das Zugeben von mindestens einem Sikkativ, das umfasst: mindestens einen polydentaten Liganden als Beschleuniger, wobei der Ligand aus der Gruppe ausgewählt ist, die aus den Liganden der Formeln (I) bis (VI) besteht: 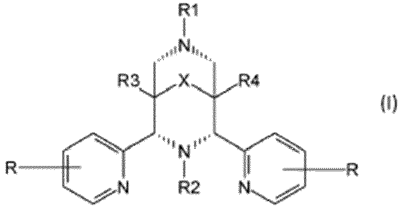 wobei:
jedes R unabhängig ausgewählt ist aus der Gruppe, die aus einem Wasserstoffatom, einem F, einem Cl, einem Br, einem Hydroxyl, einem (C₁₋₄)- Alkyl-O-, einem -NH-CO-H, einem -NH-CO-(C₁₋₄)-Alkyl, einem -NH₂, einem -NH-(C₁₋₄)- Alkyl, und einem (C₁₋₄)- Alkyl besteht;
R1 und R2 unabhängig ausgewählt sind aus der Gruppe, die aus einem (C₁₋₂₄)- Alkyl, einem (C₆₋₁₀)- Aryl, und einer Gruppe, die ein oder zwei Heteroatome (z.B. N, O oder S) enthält, welche in der Lage sind, an ein Übergangsmetall zu koordinieren, besteht;
R3 und R4 unabhängig voneinander ausgewählt sind aus der Gruppe, die aus einem Wasserstoffatom, einem (C₁₋₈)-Alkyl, einem (C₁₋₈)- Alkyl-O-(C₁₋₈)- Alkyl, einem (C₁₋₈)- Alkyl-O-(C₆₋₁₀)- Aryl, einem (C₆₋₁₀)- Aryl, einem (C₁₋₈)- Hydroxyalkyl und einem -(CH₂)ₙC(O)OR5 besteht, wobei R5 unabhängig ausgewählt ist aus einem Wasserstoffatom und einem (C₁₋₄)- Alkyl,
n eine Zahl von 0 bis 4 ist;
X ausgewählt ist aus der Gruppe, die aus C=O, und -[C(R6)₂]_{y}- besteht, wobei y eine Zahl von 0 bis 3 ist; und
jedes R6 unabhängig ausgewählt ist aus der Gruppe, die aus einem Wasserstoffatom, einem Hydroxyl, einem (C₁₋₄)-Alkoxy und einem (C₁₋₄)- Alkyl besteht; 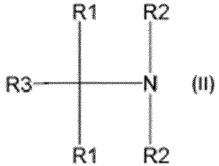
wobei:
jedes R¹ und R² unabhängig voneinander -R4-R5 darstellt;
R3 ein Wasserstoffatom, ein (C₁₋₈)- Alkyl, ein Aryl, welches aus homoaromatischen Verbindungen, die ein Molekulargewicht unter 300 aufweisen, ausgewählt ist, oder ein (C₇₋₄₀)- Arylalkyl, oder -R4-R5 darstellt;
jedes R4 unabhängig eine Einfachbindung oder ein lineares oder verzweigtes (C₁₋₈)- Alkyl-substituiertes (C₂₋₆)- Alkylen, ein (C₂₋₆)-Alkenylen, ein (C₂₋₆)- Oxyalkylen, ein (C₂₋₆)-Aminoalkylen, einen (C₂₋₆)- Alkenylether, einen (C₂₋₆)- Carbonsäureester oder ein (C₂₋₆)- Carbonsäureamid darstellt;
jedes R5 unabhängig eine gegebenenfalls N-Alkyl-substituierte Aminoalkylgruppe darstellt oder ein gegebenenfalls Alkyl-substituiertes Heteroaryl: ausgewählt aus der Gruppe, die aus einem Pyridinyl; einem Pyrimidinyl; einem Pyrazinyl; einem Triazolyl; einem Pyridazinyl; einem 1,3,5-Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann, darstellt; 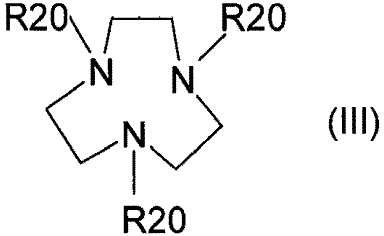
wobei:
jedes R20 unabhängig ausgewählt ist aus: einem (C₁₋₈)- Alkyl, einem (C₃₋₈)- Cycloalkyl, einem Heterocycloalkyl, welches aus der Gruppe ausgewählt ist, die aus: einem Pyrrolinyl; einem Pyrrolidinyl; einem Morpholinyl; einem Piperidinyl; einem Piperazinyl; einem Hexamethylenimin; einem 1,4-Piperazinyl; einem Tetrahydrothiophenyl; einem Tetrahydrofuranyl; einem 1,4,7- Triazacyclononanyl; einem 1,4,8,11- Tetraazacyclotetradecanyl; einem 1,4,7,10,13-Pentaaza- cyclopentadecanyl; einem 1,4-Diaza- 7-thia- cyclononanyl; einem 1,4- Diaza- 7-oxa- cyclononanyl; einem 1,4,7,10-Tetraaza-cyclododecanyl; einem 1,4- Dioxanyl; einem 1,4,7-Trithia- cyclononanyl; einem Tetrahydro-pyranyl; und einem Oxazolidinyl besteht, wobei das Heterocycloalkyl mit der Verbindung über ein beliebiges Atom im Ring des ausgewählten Heterocycloalkyls verbunden sein kann; einem Heteroaryl, welches aus der Gruppe ausgewählt ist, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann; einem Aryl, welches ausgewählt ist aus homoaromatischen Verbindungen, die ein Molekulargewicht unter 300 aufweisen; oder einer (C₇₋₄₀)- Arylalkylgruppe, die gegebenenfalls mit einem Substituenten, der aus einem Hydroxy , einem Alkoxy, einem Phenoxy, einem Carboxylat, einem Carboxamid, einem Carbonsäure-ester, einem Sulfonat, einem Amin, einem Alkylamin und N⁺(R21)₃ ausgewählt ist, substituiert sein kann;
R21 ausgewählt ist aus einem Wasserstoffatom, einem (C₁₋₈)- Alkyl, einem (C₂₋₆)- Alkenyl, einem (C₇₋₄₀)-Arylalkyl, einem Arylalkenyl, einem (C₁₋₈)-Oxyalkyl, einem (C₂₋₆)- Oxyalkenyl, einem (C₁₋₈)-Aminoalkyl, einem (C₂₋₆)- Aminoalkenyl, einem (C₁₋₈)-Alkylether, einem (C₂₋₆)- Alkenylether und -CY₂-R22;
Y unabhängig ausgewählt ist aus H, CH₃, C₂H₅, C₃H₇; und
R22 unabhängig ausgewählt ist aus einem (C₁₋₈)- Alkyl-substituierten Heteroaryl: ausgewählt aus der Gruppe, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl über ein beliebiges Atom im Ring des ausgewählten Heteroaryls mit der Verbindung verbunden sein kann; und
wobei mindestens ein R20 ein -CY₂-R22 ist; 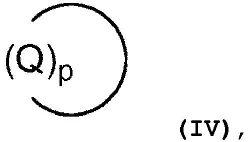
wobei:
Q unabhängig ausgewählt ist aus: 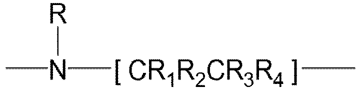 und 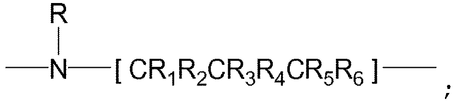
P 4 ist;
R unabhängig ausgewählt ist aus: einem Wasserstoffatom, einem (C₁₋₆)- Alkyl, CH₂CH₂OH, Pyridin- 2-ylmethyl und CH₂COOH, oder einer der Reste R ist mit dem N eines anderen Q über eine Ethylenbrücke verbunden; und
R1, R2, R3, R4, R5 und R6 unabhängig ausgewählt sind aus: H, einem (C₁₋₄)- Alkyl und einem (C₁₋₄)- Alkylhydroxy; 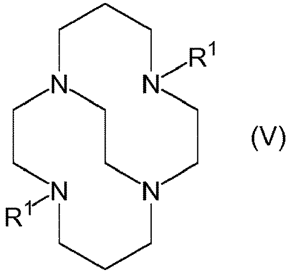
wobei:
R¹ unabhängig ausgewählt ist aus: H, einem (C₁₋₂₀)- Alkyl, einem (C₇₋₄₀)- Alkylaryl, einem (C₂₋₆)- Alkenyl oder einem (C₂₋₆)-Alkinyl;
**R17R17N-X-NR17R17** **(VI)**
wobei:
X ausgewählt ist aus: -CH₂CH₂-, -CH₂CH₂CH₂-, und -CH₂C(OH)HCH₂-;
jedes R17 unabhängig eine Gruppe darstellt, die ausgewählt ist aus : R17, einem (C₁₋₈)- Alkyl, einem (C₃₋₈)-Cycloalkyl, einem Heterocycloalkyl, welches aus der Gruppe ausgewählt ist, die aus: einem Pyrrolinyl; einem Pyrrolidinyl; einem Morpholinyl; einem Piperidinyl; einem Piperazinyl; einem Hexamethylenimin; einem 1,4-Piperazinyl; einem Tetrahydrothiophenyl; einem Tetrahydrofuranyl; einem 1,4,7- Triazacyclononanyl; einem 1,4,8,11-Tetraazacyclotetradecanyl; einem 1,4,7,10,13-Pentaazacyclopentadecanyl; einem 1,4- Diaza- 7-thia- cyclononanyl; einem 1,4- Diaza- 7-oxa-cyclononanyl; einem 1,4,7,10- Tetraazacyclo-dodecanyl; einem 1,4- Dioxanyl; einem 1,4,7-Trithia- cyclononanyl; einem Tetrahydropyranyl; und einem Oxazolidinyl besteht, wobei das Heterocycloalkyl mit der Verbindung über ein beliebiges Atom im Ring des ausgewählten Heterocycloalkyls verbunden sein kann; einem Heteroaryl, welches aus der Gruppe ausgewählt ist, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl mit der Verbindung über ein beliebiges Atom im Ring des ausgewählten Heteroaryls verbunden sein kann; einem Aryl, welches ausgewählt ist aus homoaromatischen Verbindungen, die ein Molekulargewicht unter 300 aufweisen; und (C₇₋₄₀)-Arylalkylgruppen, die gegebenenfalls mit einem Substituenten, der aus einem Hydroxy , einem Alkoxy, einem Phenoxy, einem Carboxylat, einem Carboxamid, einem Carbonsäureester, einem Sulfonat, einem Amin, einem Alkylamin und N⁺(R19)₃ ausgewählt ist, substituiert sein kann; wobei
R19 ausgewählt ist aus einem Wasserstoffatom, einem (C₁₋₈)- Alkyl, einem (C₂₋₆)- Alkenyl, einem (C₇₋₄₀)-Arylalkyl, einem (C₇₋₄₀)- Arylalkenyl, einem (C₁₋₈)-Oxyalkyl, einem (C₂₋₆)- Oxyalkenyl, einem (C₁₋₈)-Aminoalkyl, einem (C₂₋₆)- Aminoalkenyl, einem (C₁-8)- Alkylether, einem (C₂₋₆)- Alkenylether und-CY₂-R18; wobei jedes Y unabhängig voneinander aus H, CH₃, C₂H₅, C₃H₇ ausgewählt ist; und R18 unabhängig ausgewählt ist aus einem gegebenenfalls substituierten Heteroaryl: ausgewählt aus der Gruppe, die aus: einem Pyridinyl; einem Pyrimidinyl; einem Pyrazinyl; einem Triazolyl; einem Pyridazinyl; einem 1,3,5- Triazinyl; einem Chinolinyl; einem Isochinolinyl; einem Chinoxalinyl; einem Imidazolyl; einem Pyrazolyl; einem Benzimidazolyl; einem Thiazolyl; einem Oxazolidinyl; einem Pyrrolyl; einem Carbazolyl; einem Indolyl; und einem Isoindolyl besteht, wobei das Heteroaryl über ein beliebiges Atom im Ring des ausgewählten Heteroaryls mit der Verbindung verbunden sein kann; und mindestens zwei von den Resten R17 ein -CY₂-R18 sind;
und mindestens ein Übergangsmetallion, welches aus der Gruppe ausgewählt ist, die aus Fe(II), Fe(III), Mn(II), Mn(III) oder Mn(IV) besteht; zu einem wässrigen Lösungsmittel;
das Zugeben von mindestens einem Amin oder von mindestens einem Polyol zu einer wässrigen Lösung des Sikkativs;
das Zugeben von mindestens einem oberflächenaktiven Mittel zu einem nicht- wässrigen Lösungsmittel;
das Zusammenführen der Lösung des nicht- wässrigen Lösungsmittels und der wässrigen Lösung, welche mindestens eine Sikkativ und mindestens ein Amin oder Polyol enthält, unter emulgierenden Scherbedingungen, um eine Wasser-in-Öl Emulsion zu bilden;
das Zugeben des mindestens einen Isocyanats zu der Emulsion;
das Polymerisieren des mindestens einen Amins oder Polyols mit dem mindestens einen Isocyanat in der Emulsion, um eine Aufschlämmung von Polyurethan- oder Polyharnstoff-Mikrokapseln in dem nicht- wässrigen Lösungsmittel zu bilden; und
das Zugeben des mikroverkapselten Sikkativs zu einer oxidativ härtbaren lösemittelbasierten Beschichtung.

14. Das Verfahren nach Anspruch 13, welches ferner den Schritt umfasst:
das Erwärmen der Emulsion während des Schrittes des Polymerisierens.

15. Das Verfahren nach Anspruch 13 bis 14, wobei
die lösemittelbasierte Beschichtung eine Beschichtung auf Alkydbasis ist.

16. Das Verfahren nach einem der Ansprüche 13 bis 15, wobei
der polydentate Ligand als Beschleuniger die Formel (I) besitzt; und
die lösemittelbasierte Beschichtung ein Anstrichmittel ist.

## Revendications

1. Composition de revêtement à base de solvant durcissable par oxydation, comprenant:
une résine de revêtement durcissable par oxydation ; et
une pluralité de microcapsules d'un complexe d'un ion de métal de transition choisi dans l'ensemble constitué par Fe(II), Fe(III), Mn(II), Mn(III) et Mn(IV) et d'un ligand accélérateur polydenté choisi dans l'ensemble constitué par les ligands de formules (I) à (VI) : 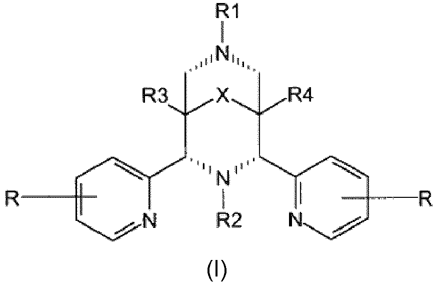
formule dans laquelle :
chaque R est indépendamment choisi dans l'ensemble constitué par un hydrogène, F, CI, Br, hydroxyle, (alkyle en C₁ à C₄)-O-, -NH-CO-H, -NH-CO-alkyle en C₁ à C₄, -NH₂, -NH-alkyle en C₁ à C₄, et alkyle en C₁ à C₄;
R1 et R2 sont indépendamment choisis dans l'ensemble constitué par alkyle en C₁ à C₂₄, aryle en C₆ à C₁₀ et un groupe contenant un ou deux hétéroatomes (par exemple N, O ou S) capables de se coordonner à un métal de transition ;
R3 et R4 sont indépendamment choisis dans l'ensemble constitué par un hydrogène, alkyle en C₁ à C₈, (alkyle en C₁ à C₈)-O-alkyle en C₁ à C₈, (alkyle en C₁ à C₈)-O-aryle en C₆ à C₁₀, aryle en C₆ à C₁₀, hydroxyalkyle en C₁ à C₈ et -(CH₂)ₙC(O)OR5 où R5 est indépendamment choisi parmi un hydrogène et alkyle en C₁ à C₄,
n vaut de 0 à 4,
X est choisi dans l'ensemble constitué par C=O, -[C(R6)₂]_{y}- où y vaut de 0 à 3 ; et
chaque R6 est indépendamment choisi dans l'ensemble constitué par un hydrogène, hydroxyle, alcoxy en C₁ à C₄ et alkyle en C₁ à C₄. 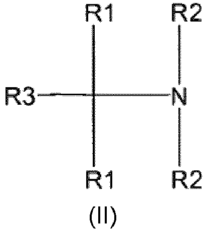
formule dans laquelle :
chaque R1 et R2 représente indépendamment -R4-R5 ;
R3 représente un hydrogène, alkyle en C₁ à C₈, aryle choisi parmi les composés homoaromatiques ayant une masse moléculaire inférieure à 300, ou arylalkyle en C₇ à C₄₀, ou bien -R4-R5,
chaque R4 représente indépendamment une liaison simple ou un alkylène en C₂ à C₆ à substitution alkyle en C₁ à C₈ linéaire ou ramifié, alcénylène en C₂ à C₆, oxyalkylène en C₂ à C₆, aminoalkylène en C₂ à C₆, alcényléther en C₂ à C₆, ester carboxylate en C₂ à C₆ ou carboxamide en C₂ à C₆, et
chaque R5 représente indépendamment un groupe aminoalkyle éventuellement substitué par N-alkyle ou un hétéroaryle éventuellement substitué par alkyle ; choisi dans l'ensemble constitué par pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle, l'hétéroaryle pouvant être connecté au composé via n'importe quel atome dans le cycle de l'hétéroaryle sélectionné. 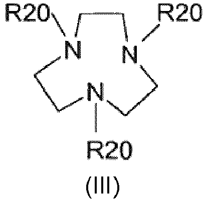
formule dans laquelle
chaque R20 est indépendamment choisi parmi : alkyle en C₁ à C₈, cycloalkyle en C₃ à C₈, hétérocycloalkyle choisi dans l'ensemble constitué par : pyrrolinyle ; pyrrolidinyle ; morpholinyle ; pipéridinyle ; pipérazinyle ; hexaméthylène-imine ; 1,4-pipérazinyle ; tétrahydrothiophényle ; tétrahydrofuranyle ; 1,4,7-triazacyclononanyle ; 1,4,8,11-tétraazacyclotétradécanyle ; 1,4,7,10,13-pentaazacyclopentadécanyle ; 1,4-diaza-7-thiacyclononanyle ; 1,4-diaza-7-oxacyclononanyle ; 1,4,7,10-tétraazacyclododécanyle ; 1,4-dioxanyle ; 1,4,7-trithiacyclononanyle ; tétrahydropyranyle ; et oxazolidinyle, l'hétérocycloalkyle pouvant être connecté au composé via n'importe quel atome dans le cycle de l'hétérocycloalkyle sélectionné ; hétéroaryle choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné, aryle choisi parmi les composés homoaromatiques ayant une masse moléculaire inférieure à 300, ou un groupe arylalkyle en C₇ à C₄₀ éventuellement substitué par un substituant choisi parmi hydroxy, alcoxy, phénoxy, carboxylate, carboxamide, ester carboxylate, sulfonate, amine, alkylamine et N⁺(R21)₃,
R21 est choisi parmi un hydrogène, alkyle en C₁ à C₈, alcényle en C₂ à C₆, arylalkyle en C₇ à C₄₀, arylalcényle, oxyalkyle en C₁ à C₈, oxyalcényle en C₂ à C₆, aminoalkyle en C₁ à C₈, aminoalcényle en C₂ à C₆, alkyléther en C₁ à C₈, alcényléther en C₂ à C₆, et -CY₂-R22,
Y est indépendamment choisi parmi H, CH₃, C₂H₅, C₃H₇, et
R22 est indépendamment choisi parmi un hétéroaryle à substitution alkyle en C₁ à C_{8;} choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné ; et
au moins l'un de R20 est -CY₂-R22. 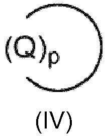
formule dans laquelle :
Q est indépendamment choisi parmi 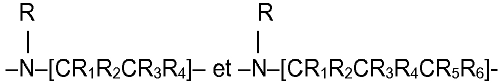
p vaut 4 ;
R est indépendamment choisi parmi : un hydrogène, alkyle en C₁ à C₆, CH₂CH₂OH, pyridin-2-ylméthyl, et CH₂COOH, ou bien un R est lié au N d'un autre Q via un pont éthylène ; et
R1, R2, R3, R4, R5 et R6 sont indépendamment choisis parmi : H, alkyle en C₁ à C₄, et alkylhydroxy en C₁ à C₄. 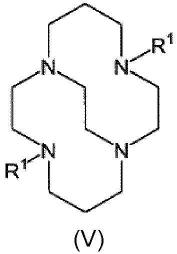
formule dans laquelle R¹ est indépendamment choisi parmi H, alkyle en C₁ à C₂₀, alkylaryle en C₇ à C₄₀, alcényle en C₂ à C₆ et alcynyle en C₂ à C₆.
R17R17N-X-NR17R17 (VI)
formule dans laquelle :
X est choisi parmi -CH₂CH₂-, -CH₂CH₂CH₂-, -CH₂C(OH)HCH₂- ;
chaque R17 représente indépendamment un groupe choisi parmi : R17, alkyle en C₁ à C₈, cycloalkyle en C₃ à C₈, hétérocycloalkyle choisi dans l'ensemble constitué par : pyrrolinyle ; pyrrolidinyle ; morpholinyle ; pipéridinyle ; pipérazinyle ; hexaméthylène-imine ; 1,4-pipérazinyle ; tétrahydrothiophényle ; tétrahydrofuranyle ; 1,4,7-triazacyclononanyle ; 1,4,8,11-tétraazacyclotétradécanyle ; 1,4,7,10,13-pentaazacyclopentadécanyle ; 1,4-diaza-7-thiacyclononanyle ; 1,4-diaza-7-oxacyclononanyle ; 1,4,7,10-tétraazacyclododécanyle ; 1,4-dioxanyle ; 1,4,7-trithiacyclononanyle ; tétrahydropyranyle ; et oxazolidinyle ; l'hétérocycloalkyle pouvant être connecté au composé via n'importe quel atome dans le cycle de l'hétérocycloalkyle sélectionné ; hétéroaryle choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné ; aryle choisi parmi les composés homoaromatiques ayant une masse moléculaire inférieure à 300, et les groupes arylalkyle en C₇ à C₄₀ éventuellement substitués par un substituant choisi parmi hydroxy, alcoxy, phénoxy, carboxylate, carboxamide, ester carboxylate, sulfonate, amine, alkylamine et N+(R19)₃, où
R19 est choisi parmi un hydrogène, alkyle en C₁ à C₈, alcényle en C₂ à C₆, arylalkyle en C₇ à C₄₀, arylalcényle en C₇ à C₄₀, oxyalkyle en C₁ à C₈, oxyalcényle en C₂ à C₆, aminoalkyle en C₁ à C₈, aminoalcényle en C₂ à C₆, alkyléther en C₁ à C₈, alcényléther en C₂ à C₆, et -CY₂-R18, où chaque Y est indépendamment choisi parmi H, CH₃, C₂H₅, C₃H₇, et R18 est indépendamment choisi parmi un hétéroaryle éventuellement substitué ; choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle, l'hétéroaryle pouvant être connecté au composé via n'importe quel atome dans le cycle de l'hétéroaryle sélectionné ;
et au moins deux R17 sont -CY₂-R18 ;
ledit complexe microencapsulé ayant une couche extérieure polymère constituée d'un polyamide, d'une polysulfonamide, d'un polyester, d'un polycarbonate, d'un polyuréthane, d'un polymère de polyurée, ou de mélanges de ceux-ci.

2. Composition de revêtement selon la revendication 1, dans laquelle ladite résine de revêtement durcissable par oxydation est une composition de revêtement à base d'alkyde ; et
ladite couche extérieure polymère est ledit polyuréthane ou ladite polyurée.

3. Composition de revêtement selon la revendication 1 ou 2, dans laquelle ladite résine de revêtement durcissable par oxydation est une peinture.

4. Composition de revêtement selon l'une quelconque des revendications 1 à 3, dans laquelle le ligand accélérateur polydenté est de formule (1).

5. Composition de revêtement selon l'une quelconque des revendications 1 à 3, dans laquelle le ligand est choisi parmi le 2,4-di(2-pyridyl)-3-méthyl-7-(pyridin-2-ylméthyl)-3,7-diazabicyclo[3.3.1]nonan-9-one-1,5-dicarboxylate de diméthyle, le 2,4-di(2-pyridyl)-3-méthyl-7-(N,N-diméthylaminoéthyl)-3,7-diazabicyclo[3.3.1]nonan-9-one-1,5-dicarboxylate de diméthyle, le 5,12-diméthyl-1,5,8,12-tétraazabicyclo[6.6.2]hexadécane, le 5,12-dibenzyl-1,5,8,12-tétraazabicyclo[6.6.2]hexadécane, le 1,4,8,11-tétraazacyclotétradécane, le 1,4,8,11-tétraméthyl-1,4,8,11-tétraazacyclotétradécane, le 1,4,7,10-tétraazacyclododécane, le 1,4,7,10-tétraméthyl-1,4,7,10-tétraazacyclododécane, et le 1,4,7,10-tétrakis(pyridin-2-ylméthyl)-1,4,7,10-tétraazacyclododécane, la N,N-bis(pyridin-2-ylméthyl)-bis(pyridin-2-yl)méthylamine, le N,N-bis(pyridin-2-ylméthyl-1,1-bis(pyridin-2-yl)-1-aminoéthane, et le N,N-bis(pyridin-2-ylméthyl)-1,1-bis(pyridin-2-yl)-2-phényl-1-aminoéthane.

6. Composition de revêtement selon l'une quelconque des revendications 1 à 5, qui comprend en outre :
au moins un siccatif secondaire ; et
au moins un agent anti-peau.

7. Composition de revêtement selon la revendication 6, dans laquelle:
ledit au moins un siccatif secondaire est choisi dans l'ensemble constitué par les complexes de zirconium, bismuth, baryum, vanadium, cérium, calcium, lithium, potassium, aluminium, strontium, et zinc ; et
ledit au moins un agent anti-peau est choisi dans l'ensemble constitué par la méthyléthylcétoxime, l'acétonoxime, la butyraldoxime, une dialkylhydroxylamine, l'acide ascorbique, un isoascorbate, un acétylacétonate, l'ammoniac, la vitamine E (tocophérol), l'hydroxylamine, la triéthylamine, la diméthyléthanolamine, l'o-cyclohexylphénol, le p-cyclohexylphénol et le 2-t-butyl-4-méthylphénol, ou des mélanges de ceux-ci.

8. Procédé pour empêcher la formation de peau d'une composition revêtement à base de solvant durcissable par oxydation dans un récipient, qui comprend les étapes suivantes :
addition d'une solution siccative aqueuse microencapsulée à base de solvant comprenant un complexe d'un ion de métal de transition choisi dans l'ensemble constitué par Fe(II), Mn(II), Mn(III) ou Mn(IV) et d'un ligand accélérateur polydenté choisi dans l'ensemble constitué par les ligands de formules (I) à (VI) : 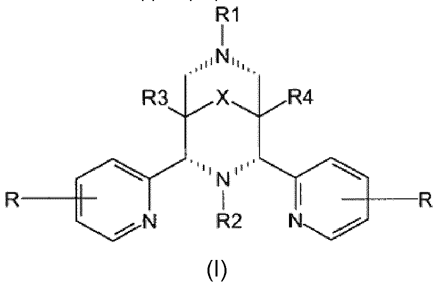
formule dans laquelle :
chaque R est indépendamment choisi dans l'ensemble constitué par un hydrogène, F, CI, Br, hydroxyle, (alkyle en C₁ à C₄)-O-, -NH-CO-H, -NH-CO-alkyle en C₁ à C₄, -NH₂, -NH-alkyle en C₁ à C₄, et alkyle en C₁ à C₄ ;
R1 et R2 sont indépendamment choisis dans l'ensemble constitué par alkyle en C₁ à C₂₄, aryle en C₆ à C₁₀ et un groupe contenant un ou deux hétéroatomes (par exemple N, O ou S) capables de se coordonner à un métal de transition ;
R3 et R4 sont indépendamment choisis dans l'ensemble constitué par un hydrogène, alkyle en C₁ à C₈, (alkyle en C₁ à C₈)-O-alkyle en C₁ à C₈, (alkyle en C₁ à C₈)-O-aryle en C₆ à C₁₀, aryle en C₆ à C₁₀, hydroxyalkyle en C₁ à C₈ et -(CH₂)ₙC(O)OR5 où R5 est indépendamment choisi parmi un hydrogène et alkyle en C₁ à C₄,
n vaut de 0 à 4,
X est choisi dans l'ensemble constitué par C=O, -[C(R6)₂]_{y}- où y vaut de 0 à 3 ; et
chaque R6 est indépendamment choisi dans l'ensemble constitué par un hydrogène, hydroxyle, alcoxy en C₁ à C₄ et alkyle en C₁ à C₄. 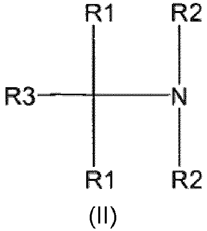
formule dans laquelle :
chaque R1 et R2 représente indépendamment -R4-R5 ;
R3 représente un hydrogène, alkyle en C₁ à C₈, aryle choisi parmi les composés homoaromatiques ayant une masse moléculaire inférieure à 300, ou arylalkyle en C₇ à C₄₀, ou bien -R4-R5,
chaque R4 représente indépendamment une liaison simple ou un alkylène en C₂ à C₆ à substitution alkyle en C₁ à C₈ linéaire ou ramifié, alcénylène en C₂ à C₆, oxyalkylène en C₂ à C₆, aminoalkylène en C₂ à C₆, alcényléther en C₂ à C₆, ester carboxylate en C₂ à C₆ ou carboxamide en C₂ à C₆, et
chaque R5 représente indépendamment un groupe aminoalkyle éventuellement substitué par N-alkyle ou un hétéroaryle éventuellement substitué par alkyle ; choisi dans l'ensemble constitué par pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle, l'hétéroaryle pouvant être connecté au composé via n'importe quel atome dans le cycle de l'hétéroaryle sélectionné. 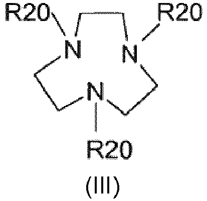
formule dans laquelle
chaque R20 est indépendamment choisi parmi : alkyle en C₁ à C₈, cycloalkyle en C₃ à C₈, hétérocycloalkyle choisi dans l'ensemble constitué par : pyrrolinyle ; pyrrolidinyle ; morpholinyle ; pipéridinyle ; pipérazinyle ; hexaméthylène-imine ; 1,4-pipérazinyle ; tétrahydrothiophényle ; tétrahydrofuranyle ; 1,4,7-triazacyclononanyle ; 1,4,8,11-tétraazacyclotétradécanyle ; 1,4,7,10,13-pentaazacyclopentadécanyle ; 1,4-diaza-7-thiacyclononanyle ; 1,4-diaza-7-oxacyclononanyle ; 1,4,7,10-tétraazacyclododécanyle ; 1,4-dioxanyle ; 1,4,7-trithiacyclononanyle ; tétrahydropyranyle ; et oxazolidinyle, l'hétérocycloalkyle pouvant être connecté au composé via n'importe quel atome dans le cycle de l'hétérocycloalkyle sélectionné ; hétéroaryle choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné, aryle choisi parmi les composés homoaromatiques ayant une masse moléculaire inférieure à 300, ou un groupe arylalkyle en C₇ à C₄₀ éventuellement substitué par un substituant choisi parmi hydroxy, alcoxy, phénoxy, carboxylate, carboxamide, ester carboxylate, sulfonate, amine, alkylamine et N⁺(R21)₃,
R21 est choisi parmi un hydrogène, alkyle en C₁ à C₈, alcényle en C₂ à C₆, arylalkyle en C₇ à C₄₀, arylalcényle, oxyalkyle en C₁ à C₈, oxyalcényle en C₂ à C₆, aminoalkyle en C₁ à C₈, aminoalcényle en C₂ à C₆, alkyléther en C₁ à C₈, alcényléther en C₂ à C₆, et -CY₂-R22,
Y est indépendamment choisi parmi H, CH₃, C₂H₅, C₃H₇, et
R22 est indépendamment choisi parmi un hétéroaryle à substitution alkyle en C₁ à C₈; choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné ; et
au moins l'un de R20 est -CY₂-R22. 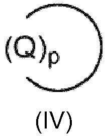
formule dans laquelle :
Q est indépendamment choisi parmi 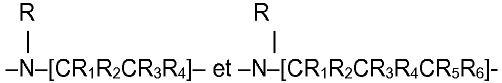
p vaut 4 ;
R est indépendamment choisi parmi : un hydrogène, alkyle en C₁ à C₆, CH₂CH₂OH, pyridin-2-ylméthyle, et CH₂COOH, ou bien un R est lié au N d'un autre Q via un pont éthylène ; et
R1, R2, R3, R4, R5 et R6 sont indépendamment choisis parmi : H, alkyle en C₁ à C₄, et alkylhydroxy en C₁ à C₄. 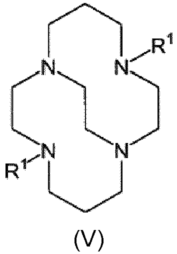
formule dans laquelle R¹ est indépendamment choisi parmi H, alkyle en C₁ à C₂₀, alkylaryle en C₇ à C₄₀, alcényle en C₂ à C₆ ou alcynyle en C₂ à C₆.
R17R17N-X-NR17R17 (VI)
formule dans laquelle :
X est choisi parmi -CH₂CH₂-, -CH₂CH₂CH₂-, -CH₂C(OH)HCH₂- ;
chaque R17 représente indépendamment un groupe choisi parmi : R17, alkyle en C₁ à C₈, cycloalkyle en C₃ à C₈, hétérocycloalkyle choisi dans l'ensemble constitué par : pyrrolinyle ; pyrrolidinyle ; morpholinyle ; pipéridinyle ; pipérazinyle ; hexaméthylène-imine ; 1,4-pipérazinyle ; tétrahydrothiophényle ; tétrahydrofuranyle ; 1,4,7-triazacyclononanyle ; 1,4,8,11-tétraazacyclotétradécanyle ; 1,4,7,10,13-pentaazacyclopentadécanyle ; 1,4-diaza-7-thiacyclononanyle ; 1,4-diaza-7-oxacyclononanyle ; 1,4,7,10-tétraazacyclododécanyle ; 1,4-dioxanyle ; 1,4,7-trithiacyclononanyle ; tétrahydropyranyle ; et oxazolidinyle ; l'hétérocycloalkyle pouvant être connecté au composé via n'importe quel atome dans le cycle de l'hétérocycloalkyle sélectionné ; hétéroaryle choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné ; aryle choisi parmi les composés homoaromatiques ayant une masse moléculaire inférieure à 300, et les groupes arylalkyle en C₇ à C₄₀ éventuellement substitués par un substituant choisi parmi hydroxy, alcoxy, phénoxy, carboxylate, carboxamide, ester carboxylate, sulfonate, amine, alkylamine et N+(R19)₃, où
R19 est choisi parmi un hydrogène, alkyle en C₁ à C₈, alcényle en C₂ à C₆, arylalkyle en C₇ à C₄₀, arylalcényle en C₇ à C₄₀, oxyalkyle en C₁ à C₈, oxyalcényle en C₂ à C₆, aminoalkyle en C₁ à C₈, aminoalcényle en C₂ à C₆, alkyléther en C₁ à C₈, alcényléther en C₂ à C₆, et -CY₂-R18, où chaque Y est indépendamment choisi parmi H, CH₃, C₂H₅, C₃H₇, et R18 est indépendamment choisi parmi un hétéroaryle éventuellement substitué ; choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle, l'hétéroaryle pouvant être connecté au composé via n'importe quel atome dans le cycle de l'hétéroaryle sélectionné ;
et au moins deux R17 sont -CY₂-R18 ;
audit revêtement à base de solvant durcissable par oxydation ; et
mélange de ladite composition de revêtement à base de solvant durcissable par oxydation et de ladite solution aqueuse microencapsulée comprenant ledit complexe dudit ion de métal de transition et dudit ligand accélérateur polydenté par utilisation d'un mélange avec une force de cisaillement.

9. Procédé selon la revendication 8, dans lequel la solution siccative aqueuse microencapsulée à base de solvant comprend de 0,001 à 8 % en poids du complexe, par rapport au poids de l'eau dans la solution aqueuse.

10. Procédé selon la revendication 8 ou 9, dans lequel ledit revêtement à base de solvant est un revêtement à base d'alkyde.

11. Procédé selon l'une quelconque des revendications 8 à 10, dans lequel le ligand accélérateur polydenté est de formule (I) ; et
le revêtement à base de solvant est une peinture.

12. Procédé selon l'une quelconque des revendications 8 à 11, qui comprend en outre l'étape suivante :
addition d'au moins un siccatif secondaire ;
et/ou qui comprend en outre l'étape suivante :
addition d'au moins un agent anti-peau.

13. Procédé de formation d'un siccatif encapsulé pour une utilisation dans un revêtement à base de solvant, comprenant les étapes suivantes :
addition d'au moins un siccatif comprenant au moins un ligand accélérateur polydenté choisi dans l'ensemble constitué par les ligands de formules (I) à (VI) : 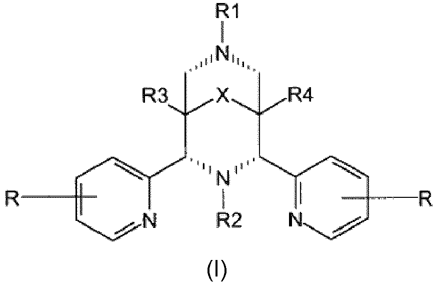
formule dans laquelle :
chaque R est indépendamment choisi dans l'ensemble constitué par un hydrogène, F, Cl, Br, hydroxyle, (alkyle en C₁ à C₄)-O-, -NH-CO-H, -NH-CO-alkyle en C₁ à C₄, -NH₂, -NH-alkyle en C₁ à C₄, et alkyle en C₁ à C₄ ;
R1 et R2 sont indépendamment choisis dans l'ensemble constitué par alkyle en C₁ à C₂₄, aryle en C₆ à C₁₀ et un groupe contenant un ou deux hétéroatomes (par exemple N, O ou
S) capables de se coordonner à un métal de transition ;
R3 et R4 sont indépendamment choisis dans l'ensemble constitué par un hydrogène, alkyle en C₁ à C₈, (alkyle en C₁ à C₈)-O-alkyle en C₁ à C₈, (alkyle en C₁ à C₈)-O-aryle en C₆ à C₁₀, aryle en C₆ à C₁₀, hydroxyalkyle en C₁ à C₈ et -(CH₂)ₙC(O)OR5 où R5 est indépendamment choisi parmi un hydrogène et alkyle en C₁ à C₄,
n vaut de 0 à 4,
X est choisi dans l'ensemble constitué par C=O, -[C(R6)₂]_{y}- où y vaut de 0 à 3 ; et
chaque R6 est indépendamment choisi dans l'ensemble constitué par un hydrogène, hydroxyle, alcoxy en C₁ à C₄ et alkyle en C₁ à C₄. 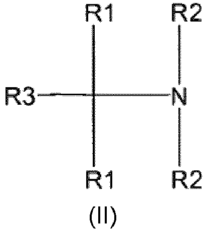
formule dans laquelle :
chaque R1 et R2 représente indépendamment -R4-R5 ;
R3 représente un hydrogène, alkyle en C₁ à C₈, aryle choisi parmi les composés homoaromatiques ayant une masse moléculaire inférieure à 300, ou arylalkyle en C₇ à C₄₀, ou bien -R4-R5,
chaque R4 représente indépendamment une liaison simple ou un alkylène en C₂ à C₆ à substitution alkyle en C₁ à C₈ linéaire ou ramifié, alcénylène en C₂ à C₆, oxyalkylène en C₂ à C₆, aminoalkylène en C₂ à C₆, alcényléther en C₂ à C₆, ester carboxylate en C₂ à C₆ ou carboxamide en C₂ à C₆, et
chaque R5 représente indépendamment un groupe aminoalkyle éventuellement substitué par N-alkyle ou un hétéroaryle éventuellement substitué par alkyle ; choisi dans l'ensemble constitué par pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle, l'hétéroaryle pouvant être connecté au composé via n'importe quel atome dans le cycle de l'hétéroaryle sélectionné. 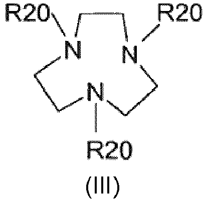
formule dans laquelle
chaque R20 est indépendamment choisi parmi : alkyle en C₁ à C₈, cycloalkyle en C₃ à C₈, hétérocycloalkyle choisi dans l'ensemble constitué par : pyrrolinyle ; pyrrolidinyle ; morpholinyle ; pipéridinyle ; pipérazinyle ; hexaméthylène-imine ; 1,4-pipérazinyle ; tétrahydrothiophényle ; tétrahydrofuranyle ; 1,4,7-triazacyclononanyle ; 1,4,8,11-tétraazacyclotétradécanyle ; 1,4,7,10,13-pentaazacyclopentadécanyle ; 1,4-diaza-7-thiacyclononanyle ; 1,4-diaza-7-oxacyclononanyle ; 1,4,7,10-tétraazacyclododécanyle ; 1,4-dioxanyle ; 1,4,7-trithiacyclononanyle ; tétrahydropyranyle ; et oxazolidinyle, l'hétérocycloalkyle pouvant être connecté au composé via n'importe quel atome dans le cycle de l'hétérocycloalkyle sélectionné ; hétéroaryle choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné, aryle choisi parmi les composés homoaromatiques ayant une masse moléculaire inférieure à 300, ou un groupe arylalkyle en C₇ à C₄₀ éventuellement substitué par un substituant choisi parmi hydroxy, alcoxy, phénoxy, carboxylate, carboxamide, ester carboxylate, sulfonate, amine, alkylamine et N⁺(R21)₃,
R21 est choisi parmi un hydrogène, alkyle en C₁ à C₈, alcényle en C₂ à C₆, arylalkyle en C₇ à C₄₀, arylalcényle, oxyalkyle en C₁ à C₈, oxyalcényle en C₂ à C₆, aminoalkyle en C₁ à C₈, aminoalcényle en C₂ à C₆, alkyléther en C₁ à C₈, alcényléther en C₂ à C₆, et -CY₂-R22,
Y est indépendamment choisi parmi H, CH₃, C₂H₅, C₃H₇, et
R22 est indépendamment choisi parmi un hétéroaryle à substitution alkyle en C₁ à C₈ ; choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné ; et
au moins l'un de R20 est -CY₂-R22. 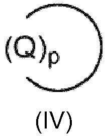
formule dans laquelle :
Q est indépendamment choisi parmi 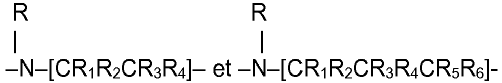
p vaut 4 ;
R est indépendamment choisi parmi : un hydrogène, alkyle en C₁ à C₆, CH₂CH₂OH, pyridin-2-ylméthyl, et CH₂COOH, ou bien un R est lié au N d'un autre Q via un pont éthylène ; et
R1, R2, R3, R4, R5 et R6 sont indépendamment choisis parmi : H, alkyle en C₁ à C₄, et alkylhydroxy en C₁ à C₄. 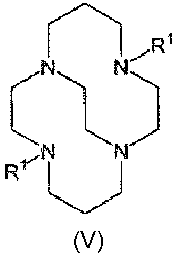
formule dans laquelle R¹ est indépendamment choisi parmi H, alkyle en C₁ à C₂₀, alkylaryle en C₇ à C₄₀, alcényle en C₂ à C₆ ou alcynyle en C₂ à C₆.
R17R17N-X-NR17R17 (VI)
formule dans laquelle :
X est choisi parmi -CH₂CH₂-, -CH₂CH₂CH₂-, -CH₂C(OH)HCH₂- ;
chaque R17 représente indépendamment un groupe choisi parmi : R17, alkyle en C₁ à C₈, cycloalkyle en C₃ à C₈, hétérocycloalkyle choisi dans l'ensemble constitué par : pyrrolinyle ; pyrrolidinyle ; morpholinyle ; pipéridinyle ; pipérazinyle ; hexaméthylène-imine ; 1,4-pipérazinyle ; tétrahydrothiophényle ; tétrahydrofuranyle ; 1,4,7-triazacyclononanyle ; 1,4,8,11-tétraazacyclotétradécanyle ; 1,4,7,10,13-pentaazacyclopentadécanyle ; 1,4-diaza-7-thiacyclononanyle ; 1,4-diaza-7-oxacyclononanyle ; 1,4,7,10-tétraazacyclododécanyle ; 1,4-dioxanyle ; 1,4,7-trithiacyclononanyle ; tétrahydropyranyle ; et oxazolidinyle ; l'hétérocycloalkyle pouvant être connecté au composé via n'importe quel atome dans le cycle de l'hétérocycloalkyle sélectionné ; hétéroaryle choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle ; l'hétéroaryle pouvant être connecté au composé via n'importe quel atome dans le cycle de l'hétéroaryle sélectionné ; aryle choisi parmi les composés homoaromatiques ayant une masse moléculaire inférieure à 300, et les groupes arylalkyle en C₇ à C₄₀ éventuellement substitués par un substituant choisi parmi hydroxy, alcoxy, phénoxy, carboxylate, carboxamide, ester carboxylate, sulfonate, amine, alkylamine et N+(R19)₃, où
R19 est choisi parmi un hydrogène, alkyle en C₁ à C₈, alcényle en C₂ à C₆, arylalkyle en C₇ à C₄₀, arylalcényle en C₇ à C₄₀, oxyalkyle en C₁ à C₈, oxyalcényle en C₂ à C₆, aminoalkyle en C₁ à C₈, aminoalcényle en C₂ à C₆, alkyléther en C₁ à C₈, alcényléther en C₂ à C₆, et -CY₂-R18, où chaque Y est indépendamment choisi parmi H, CH₃, C₂H₅, C₃H₇, et R18 est indépendamment choisi parmi un hétéroaryle éventuellement substitué ; choisi dans l'ensemble constitué par : pyridinyle ; pyrimidinyle ; pyrazinyle ; triazolyle ; pyridazinyle ; 1,3,5-triazinyle ; quinolinyle ; isoquinolinyle ; quinoxalinyle ; imidazolyle ; pyrazolyle ; benzimidazolyle ; thiazolyle ; oxazolidinyle ; pyrrolyle ; carbazolyle ; indolyle ; et isoindolyle, l'hétéroaryle pouvant être connecté au composé via n'importe quel atome dans le cycle de l'hétéroaryle sélectionné ;
et au moins deux R17 sont -CY₂-R18 ;
au moins un ion de métal de transition choisi dans l'ensemble constitué par Fe(II), Fe(III), Mn(II), Mn(III) et Mn(IV) dans un solvant aqueux ;
addition d'au moins une amine ou d'au moins un polyol dans une solution aqueuse du siccatif ;
addition d'au moins un tensioactif dans un solvant non aqueux ;
combinaison de ladite solution de solvant non aqueux et de ladite une solution aqueuse comprenant au moins un siccatif et au moins une amine ou un polyol dans des conditions d'émulsification par cisaillement pour former une émulsion eau dans l'huile ;
addition dudit au moins un isocyanate à ladite émulsion ;
polymérisation dudit au moins un polyol ou amine avec ledit au moins un isocyanate dans ladite émulsion pour former une bouillie de microcapsules de polyuréthane ou de polyurée dans ledit solvant non aqueux ; et
addition dudit siccatif microencapsulé à un revêtement à base de solvant durcissable par oxydation.

14. Procédé selon la revendication 13, qui comprend en outre l'étape de :
chauffage de ladite émulsion durant ladite étape de polymérisation.

15. Procédé selon l'une quelconque des revendications 13 et 14, dans lequel ledit revêtement à base de solvant est un revêtement à base d'alkyde.

16. Procédé selon l'une quelconque des revendications 13 à 15, dans lequel le ligand d'accélération polydenté est de formule (I) ; et
le revêtement à base de solvant est une peinture.
